# EUROPEAN PATENT SPECIFICATION

(11) **EP 3 567 147 B1**
(45) Date of publication and mention of the grant of the patent: **18.03.2026**
(21) Application number: 19173641.2
(22) Date of filing: 09.05.2019
(51) Int. Cl.: D04B 1/22, B29C 70/22

(54) **METHOD OF MANUFACTURING A FIBER REINFORCED POLYMER COMPOSITE PANEL**
VERFAHREN ZUR HERSTELLUNG EINER FASERVERSTÄRKTEN POLYMER-VERBUNDFLACHWARE
PROCÉDÉ POUR LA RÉALISATION D'UNE STRUCTURE PLATE EN POLYMÈRES RENFORCÉE PAR FIBRES

(30) Priority: 09.05.2018 US 201862669255 P
(43) Date of publication of application: 13.11.2019
(73) Proprietor: Fabdesigns, Inc., Encino, CA 91436 (US)
(72) Inventor: Huffa, Bruce, Malibu, CA California 90265 (US); Huffa, Concetta Maria, Malibu, CA California 90265 (US)
(74) Representative: IK-IP LTD

(56) References cited:
- WO-A1-2010/142608
- WO-A1-2016/144971
- DE-A1- 3 937 406
- GB-A- 720 687

## Description

### TECHNICAL FIELD

Embodiments of the present disclosure relate generally to a method of manufacturing fiber reinforced polymer composite panel structures.

### BACKGROUND OF THE INVENTION

A textile may be defined as any manufacture from fibers, filaments, or yams characterized by flexibility, fineness, and a high ratio of length to thickness. The materials forming composite polymer reinforcing panel may be selected based upon the properties of wear-resistance, flexibility, stretch, surface friction, impact resistance, weight bearing properties, fracture toughness, and tensile strength for examples. One of the strongest, stiffest, and more protective fibers is composite carbon fiber. Fiber reinforced polymerized plastic materials are a group of composite materials which are made up of a polymer matrix reinforced with fibers. Combining the characteristics of the fibers or textile material and characteristics of the polymers, together form a new composite material with physical properties exceeding those of either original material. Such composite materials are used in aerospace, automotive, sporting goods and consumer goods because their strength to weight ratio exceeds all other known materials and material constructions.

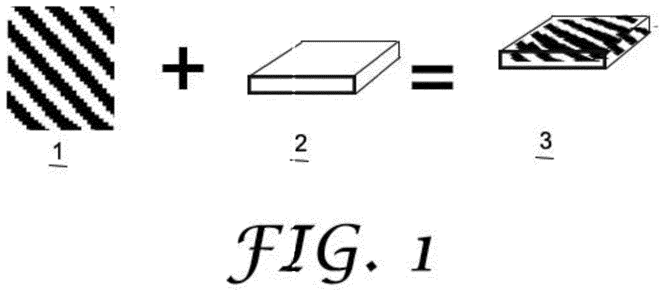

Composites materials are composed of two or more chemically distinct materials, which, when combined, have improved properties over the original individual materials. FIG. 1 illustrates the composition of a composite material. One of the materials is in a reinforcing phase 1, and the other is in a matrix phase 2, typically a polymer or resin. The reinforcing phase material 1 is embedded in the matrix, for example: fibers, sheets, fabrics, or particles. The fiber and/or filament reinforcement material typically has high strength, high stiffness, and low density and can be long or short fiber format. Examples of reinforcement fibers are: carbon "graphene", glass S-glass, r-glass, hemp, jute, flax, boron, basalt, ceramics, metals, aramids, para-aramids and basalt. The matrix material typically has good shear properties and low density. Examples of matrix materials are polymers epoxides, polyesters, nylons, HDPE, etc., resins, metals aluminum alloys, magnesium alloys, titanium, etc., and ceramics SiC, glass ceramic, etc. There may also be an interface for insuring bonding and/or surface adherence. Hundreds of types of resins are also available, each having specific chemical and physical characteristics. The most commonly used are the polyester and epoxy families. Various types of natural and synthetic fibers are commercially available as well. For example: glass, carbon, hemp, Kevlar^{®}, flax, boron, linen, basalt, and ultra-high-molecular-weight- polyethylene UHMWPE.

The resulting fiber reinforced polymer matrix composite 3 typically embodies properties superior to both the matrix material and the reinforcement material, such as high strength to weight, high stiffness, good shear properties and a low density. Fiber Reinforced Polymer (FRP) composite materials are used in several types of protective, performance vehicle, and sport crafts to provide the necessary stiffness, without adding a tremendous amount of weight. One reinforcing fiber material is carbon fiber, which frequently is used in making various two-dimensional woven textile in aerospace, architecture, infrastructure, geotextiles, marine applications, pipe and tank applications, sports and recreation, wind and solar energy. Automotives utilize a significant amount of composites for structural and aesthetic purposes in OEM and aftermarket vehicle parts. Composites are frequently used in aerospace for functional, performance, and protective purposes, some examples are heat resistance, stiffening, debris, corrosion, and impact protection, high functionality performance in cold and extreme environments, extraordinarily high abrasion resistant characteristics, high durability, springiness when molded into a convex curves flex and recovery, shrink resistance. In sports and recreation for example, two-dimensional woven FRP composites parts, specifically composite carbon fiber sheets, are cut, shaped and polymerized for use in body-protecting wearable products, including helmets and road armor for cycling, automotive racing aerodynamic parts, shoe inserts, sole plates, shanks under the arch of the foot, heel counters, in portions of basketball shoes, hockey skates, and in running shoes to minimize stretch and improve stability and responsiveness of the article. Carbon fiber is considered a premium FRP material when incorporated into consumer products, due to the high-end costs of weaving, handling, cutting, polymerizing, and manufacturing components from two-dimensional sheets.

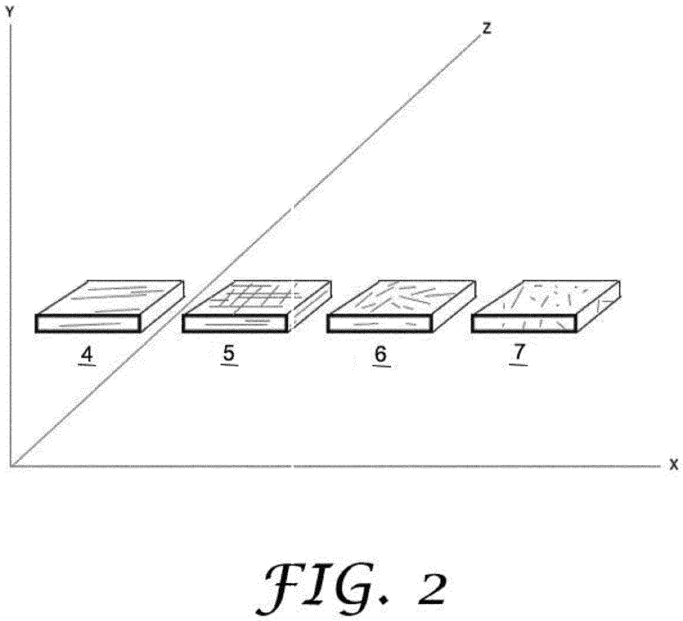

From the perspective of manufacturing, the reinforcement fibers in the composite may be unidirectional 4, bi-directional 5, two-directional random 6, or three dimensional random 7, depending on the orientation of the fibers. FIG. 2 shows different reinforcement fiber orientations in composite materials. In a unidirectional or one direction composite, the reinforcing fibers are aligned substantially in one direction and in one plane on an X, Y, Z model. In a bi-directional composite, the reinforcing fibers are substantially aligned on one plane of an X, Y, Z model, but in two directions, sometimes perpendicular to each other. In a two-dimensional random composite, the reinforcing fiber material is substantially disposed on one plane of and X, Y, Z model, but may be in any direction, including amorphous. In a three-dimensional random fiber reinforced composite structure, the fibers lie in multiple directions and on multiple planes.

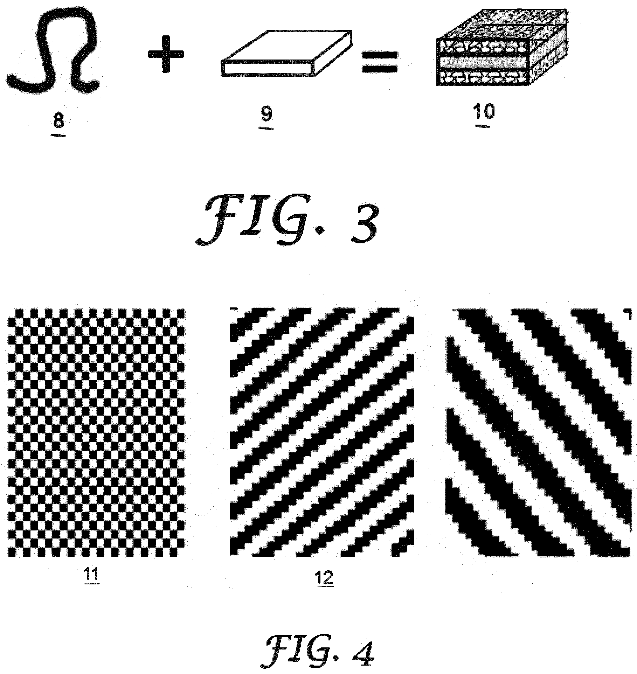

Knitting can create a fifth form of fiber orientation alignment. FIG. 3 illustrates a knit-reinforced composite.. As shown in FIG. 3, a complex distribution of linked fibers 8 which reside in three dimensions, may be layered in the knitting process. Polymer 9 is added with the fibers 8, and the resulting structure may be a thin sheet, a corrugation 10, or an article completely knitted to shape in one or more structures. Through knitting such an article, the greatest density and alignment of fiber tensile strength can be placed where the most rigid performance is required.

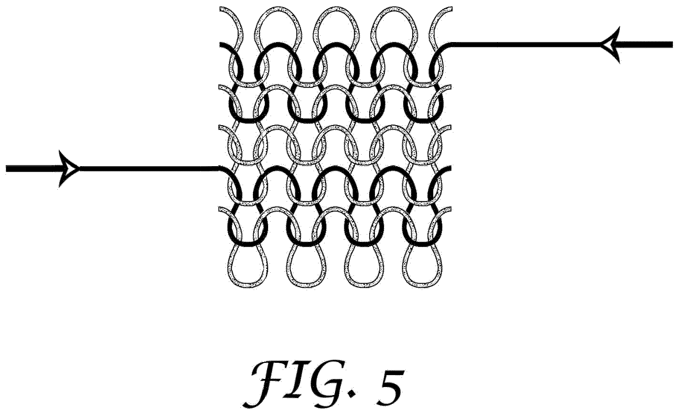

The term weft knitting is used to describe the construction of fabric by feeding yarn and forming loops in the horizontal "weft" direction. FIG. 5 shows the loops and stitches formed in a weft knitting process. The term V-bed or flat-bed knitting describes weft knitting by feeding yarn and forming loops, with at least two opposing needle beds, where latch needles and other elements are selected and slide during the knitting process, to engage strands of material, to create a fabric. FIG. 4 shows common carbon fiber weaves resulting from a knitting process. There is typically a technical textile face 11 and a technical textile back 12 to the fabric, and a grain, indicated by the direction of the loops in FIG. 5.

In V-bed flat knitting, the needle beds are positioned at an angle resembling a "V" shape. FIG. 6 shows the needle beds and needles in a knitting machine. FIG. 7 shows the configuration of two needle beds on a knitting machine. Fabrics 22 are produced and accumulated under the beds. Each bed 13 has a set of hundreds of needles 14. FIG. 8 shows the configuration of four needle beds on a knitting machine. Four needle bed machines (such as the Shima Seiki Mach2X and the H. Stoll AG & Co. KG 730T, and 530T Electronic flat knitting machines) have two needle beds 13 with hundreds of needles 14, and additionally have auxiliary needle beds 15 with hundreds of fashioning points and/or needles 16, which correspond to the same spacing and occurrence of needles in the beds below 13.

In both four needle bed machines and two needle beds machines, duration operation, strands of material on cones 17 or spools 18 are fed 19 into feeders 20. Several feeders are located on each machine and run along rails 21 in a horizontal direction. The strands run through the feeders and are manipulated by the feeders both feeders along the length of a pre-programmed length of the needle bed 13 and in the horizontal weft direction. At the same time, knitting needles 14 operate to interlace the strands into loops. The resulting fabric 22 exits the machine under the needle beds.

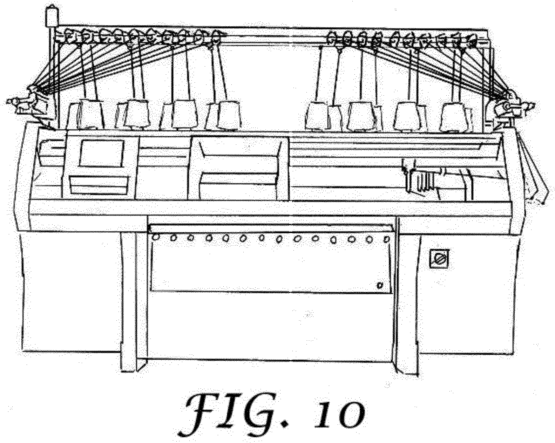

FIG. 10 shows a front view of an electronic knitting machine. An electronic knitting machine can be programmed and controlled to automatically select the needles and other elements via mechanical and/or digital instruction process. (Cite: Knitting Technology, David J Spencer, Leicester Polytechnic, UK, Pergamon Press, 1983, second edition 1989, third edition 2001; P43.)

In shaping V-bed weft knitted fabric into a reinforcing structure, such as that for a vehicle, there are several ways currently utilized: cutting composite panels and fabricate; flocking fiber into a mold; and applying fiber mats or batting to a mold. For smaller components, precursor acrylonitrile fiber may be placed in a mold and heated several times, first at 400 degrees Celsius and then again at 1300 degrees Celsius to remove the hydrogen and line the carbon molecules in the hexagonal aromatic rings, which are more or less aligned parallel to the long axis of the fiber in a crystalline shape, making the fibers strong for their size. Scraps of this material rarely can be used for other purposes and last an extremely long time in a landfill due to the very reasons of near indestructibility for which this material is used.

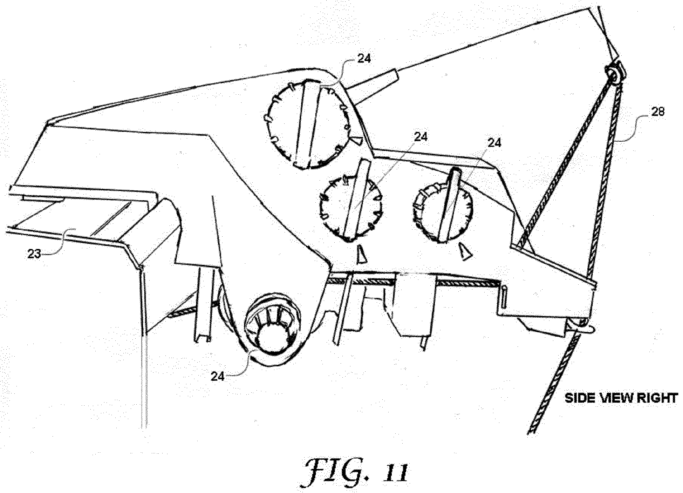

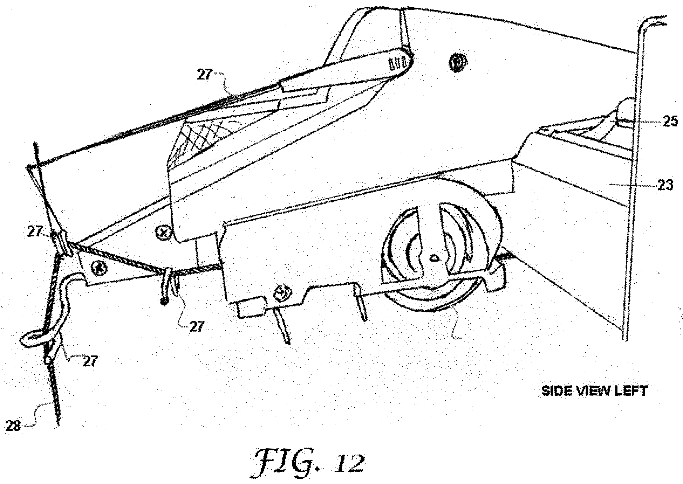

Seaming and sealing FRP materials are prone to human errors and fatigue in the seaming process. Seams create potential points of functional failure. In the case of carbon fiber, fiber reinforcing materials, stainless steel, polyurethane coated, or other stiff reinforcing fibers, these potential problems are increased at the seaming points. Unlike common textile materials, introducing FRP materials, chain, wire, or other functional materials to a standard OEM knitting machine causes several challenges. Current methods of knitting carbon fiber and other fiber reinforcing textiles, integrating stainless steel, wire, heating elements, chain, or other stiff fibers, pose challenges to the 'depackaging' and feeding of those materials into a conventional knitting machine utilizing standard OEM stop motions and standard OEM feeders. FIG. 11 shows a right side view of standard stop motions on an OEM feeder. FIG. 12 shows a left side view of standard stop motion control on the OEM feeder. FIG. 12 shows a bottom view of standard stop motions on the OEM feeder. The feeders are mounted on a stock OEM bar 23 above the needle beds, have built in manual tensioning controls 24.

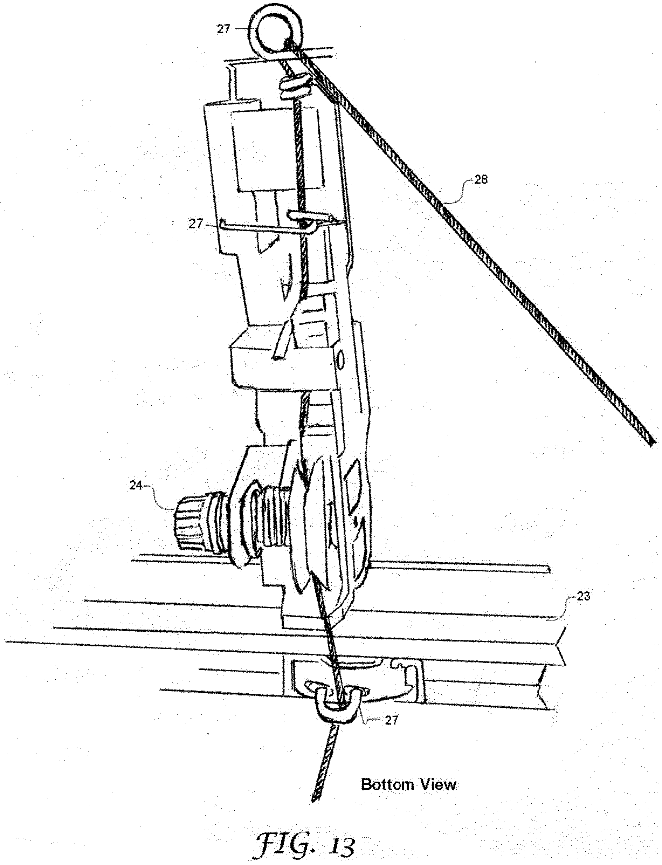

In FIG. 12, the stock OEM bar 23 has an electronic cable 25 inside a groove, which connects each stop motion to the machine's main computer system. Stiff material, such as carbon fiber, must bend several times 26 through multiple right, obtuse, and acute angles (FIG. 13), as it passes through these standard OEM fittings, and guides 27, causing a significant amount of friction, static build up that can damage machine computers and other machine electronics, breakage of fiber, excessive wear on the machine parts, drag of fiber slowing down production, and many other complications. Carbon fiber, wire, and many other functional strand materials are typically packaged on a spool 18, a cylinder, or a cone 17 device. When a material is deployed from the device, the material tends to balloon on itself and spiral into a coil. After several revolutions, the spiraling process can create a graduated spring in the fabric and in the slack strand, which is undesirable in and of itself. A strand twisting upon itself can cause fiber breakage, excess friction and abrasion on the machine parts that touch the fibers, and finally breaking of the strand itself. Breakage can usually not be mended on the strand and/or the fabric growing in the machine, and results in waste scrap, production down time, damaged product, frequently damaged machine parts needles, stop motions, knock over verges, sinkers, sinker, wires and other costly machine parts.

Currently, the only practical alternative is using one of the two products from a machine builder, depending on which machine type the user is utilizing. Machine builders such as Shima Seiki of Japan, and H. Stoll AG & Co. KG of Reutlingen Germany have created unspooling devices to address such 'de-packaging' or unspooling of materials on spools, cones, and cylinders which pose such problems. Both companies have large unspooling devices mounted on the floor or beside a machine, which feed up to two of these materials into a knitting machine. However, knitting a more complex structure, using more than two unspooling strand feeds on standard machine builder equipment, such as fiber reinforcing structures for composites, such as vehicle panels, is currently not possible.

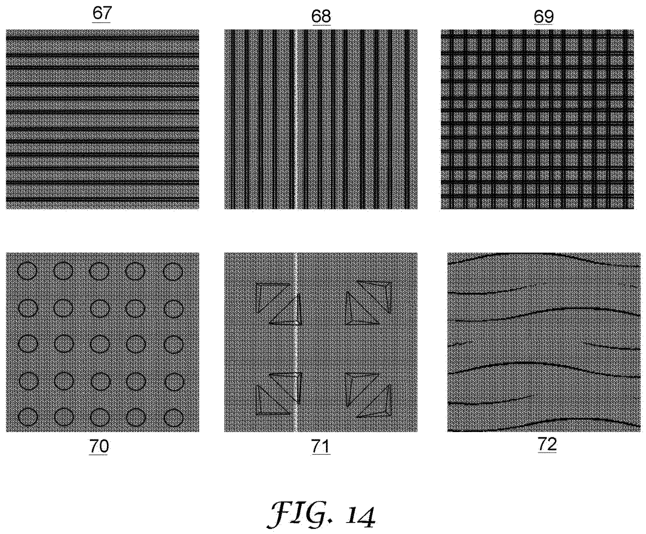

Polymer reinforcing fabric structure can be used to create textures for different purposes including creating added strength, non-skid surfaces and other types of structures requiring multiple strands of material. FIG. 14 shows various textured knit structures that offer different performance characteristics. The textures may include horizontal ribs 67, vertical ribs 68, vertical and horizontal tuck structures 69, creating a raised cardigan or half cardigan strength grid, bobble 70 non-skid raised nodes, three-dimensional raised spacer structures that have a higher profile than the base fabric structure, short-rowed fabric 72, creating waves, which may include tunnels, channels or tubes which may be filled, empty or transport internal materials such as wires, ceramics, or other materials.

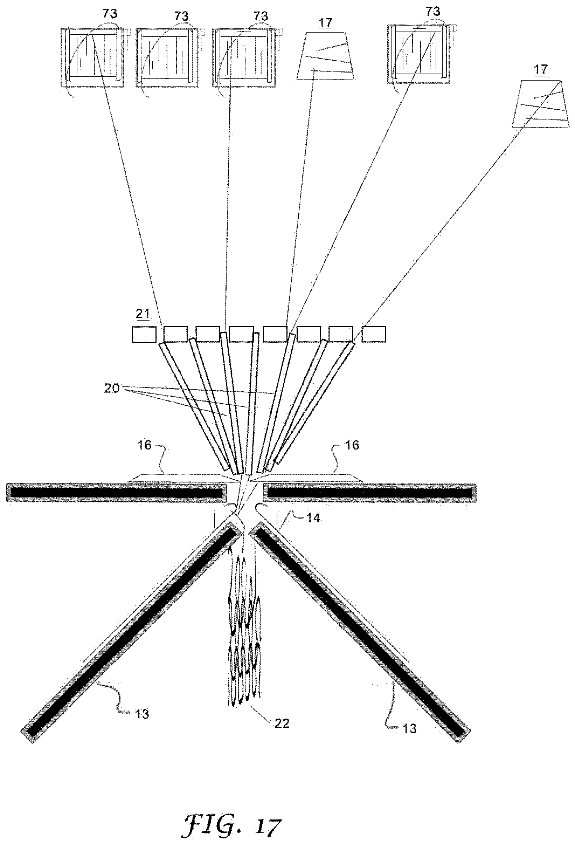

Knitting complex structures requires transfers between the needle beds. Thus, an unspooling device may be required to unspool functional strands of carbon fiber, ceramic, alloys metal wires, and other fiber reinforcing materials such as silicon, high heat resistant ceramics, vitreous silica fibers, thermo coupling wires, shape memory alloys Nitinol, metal components, braids, aramids, para aramids, fiber optic cable, and other specialized materials which may be incorporated into the fiber reinforcing structure in the same knitting process. Structures may be created with performance enhancing characteristics through knitting texture in specific placements. Examples are horizontal raised ribs 67, vertical ribs 68, vertical and horizontal tuck stitches increase stitch density in a grid pattern, adding dimensional strength, bobble raised stites 70, raised geometric spacer corrugations 71, and short rowed fabric 72 that creates dimensional effects of waves, with raised tubular structures. The short rowing distorts the fabric grain and the raised tubes create a nonskid texture. One or a plurality of unspooling devices may be mounted on one knitting machine, FIG. 17, driving a plurality of functional strands of carbon fiber, wire, or other special materials 28 off one or a plurality of spools 18, cones 17, or other packages, in coordination with the movement of the knitting machine's feeder system 20. This feed system allows for integrating of fiber, horizontally, vertically, and diagonally by knitting, inlaying, floating, and tucking.

The effect of fiber orientation on composite material properties is an important factor in the strategic design of composite molding process. Mold cavity geometry can vary greatly throughout the part, especially in vehicle panels. Traditionally knits drape better than woven constructions bi-directional. Knitting polymer reinforcing materials to the dimensions of a mold shape cuts down on lay-up time, but also orients the fibers into tiny links, which conform to the shape of the mold, much like chainmail conforms to a body. The resulting multi-dimensional fiber orientation has a direct correlation with mechanical properties. Highly oriented fibers have a high modulus in the direction of orientation and a much lower one about one-third as much in the cross-direction sides. Variation in fiber alignment corresponds to variations in mechanical properties and tensile strength in even unsophisticated part geometry. Under mechanical loading, uni-directional and bi-directional FRP carbon fiber sheets exhibit very strong tensile strength. However, they can be brittle when their edges are impacted and typically exhibit a significant plasticity prior to rupture when bent. Knitted polymer reinforcing fibers are multi-dimensional and can be knitted in a variety of thicknesses and constructions that limit stretch in the weft or warp direction. Simple constructions, such as ribs, can me added incrementally to improve strength.

The density of current reinforcing fibers in a composite structure may be seventy percent or more due to the fact that the fibers themselves are responsible for the mechanical properties of the resulting composite. Thermoplastic and/or thermoset matrix materials are typically polyester epoxy, fluorocarbon, silicon, phenolic, etc. Ceramic composites are used in high temperature and corrosive applications. Silicon carbide and other compounds of silicon and aluminum retain strength up to 3000 degrees Fahrenheit.

Matrixed composites can have various forms of reinforcing material. For example, nonwoven mats, batting, or chopped fibers are laid in place or fibers and flocked as a non-woven assembly of fiber material. Braided tubes, braided webbing, warp knits, weft knits and woven yarns "strands" used for reinforcing polymer matrices are typically homogenous, for example, the common two-dimensional 2X2 twill pattern used for fabricating carbon fiber panels. Woven fabrics interlace two or more yarn systems, vertically and horizontally, creating right angles or 'warp' and 'weft', and are the most common reinforcement structure, utilizing glass, carbon, para-aramids, aramids and other materials.

Woven panels, braided tubes, non-woven mats and knitted construction are typically regular in their formation and panel geometry, meaning they are rectangular in dimension, typically roll goods, and ready for additional cutting, forming, seaming and sealing processes. The mechanical properties of aligning fibers perpendicular to each other in a 'warp," and "weft" offers high density of fiber, and modulus of strength, in relationship to fabric thickness.

Carbon fiber matrix textile composites, including polyacrylonitrile fibers and other non-polymer fiber strands as a precursor, which are carbonized, woven or layered, and impregnated with resin, are two-dimensional fiber reinforced polymer composite materials. The carbon fibers are arranged perpendicular to each other in a twill weave. The most common weave configurations for carbon fibers are: 2×2 Twill, 4×4 twill, five harness satin, plain weave and eight harness satin. Glass fibers are typically non-woven to strengthen thermosetting resin constructions which are commonly used in the aerospace, automotive, marine, and construction industries. FRPs are commonly found in ballistic armor as well.

Matrixed composites can be laminated, meaning layers or plies of separate reinforcement materials are stacked in a specific pattern, to obtain specific performance characteristics. The configuration of one layer may be different to the adjacent layer.

Current woven fiber reinforced panel sheets are homogenous in thickness and construction, having the same properties throughout, with no ability to create breathability, unless holes or perforations are cut into the sheet. Flexibility of the material is dependent on thickness and length and width of the cut piece. FRP sheets require a lengthy process to create materials in sheets to be used in fabrication. For example, carbon fiber can be five times as strong as steel and twice as stiff as compared with the same unit of weight. Carbon fiber is mainly comprised of carbon atoms that are bonded together and aligned to form the long axis of the fiber. Each fiber is typically five to ten microns in diameter and is made from organic polymers. Most carbon fibers are made from the polyacrylonitrile PAN process, and others are made from rayon or petroleum pitch process. Several thousand of these very small fibers are twisted together to form a strand. During the strand making process, the strand is often impregnated with a resin. In the industry, this is called 'prepreg,' as described above. Carbon fiber can be woven into a twill fabric format from 'prepreg', comingled, or unresinated stands. In the case of un-resonated fibers, a mold is selected, and mold release applied. The fabric is cut into the desired shapes then laid-up in the desired geometric configuration of the mold and resin is applied. A layer of plastic-coated absorbing material is applied on top. The air is vacuumed out, pulling the resin into the carbon fabric, and then the assembly is left to harden. The absorbing fabric and plastic are removed, and the carbon reinforced polymer component, retaining the shape of the mold is removed.

Silicon carbide, vitreous silica, other compounds of silicon and aluminum, and carbon graphiteare also resistant to chemicals and tolerant to high temperatures while exhibiting low thermal expansion. Because of its strength, corrosion resistance, lightness in weight, and flexibility, carbon fiber would seem a suitable material for shaped composite panels, and supportive components of vehicles. However current methods of utilizing carbon fiber and additional fiber reinforced polymers in structured panels, such as those for vehicles, require sourcing, purchasing, stocking, handling, cutting, bundling of both usable pieces and scrap, as well as specialized care in disposal of a very durable scrap composite material, which will last indefinitely in a landfill. Recycling carbon fiber is expensive, requiring reheating of the materials to melt the resin and repurpose the carbon. Typically the fibers are short and chopped, and if repurposed, the resulting structures are not as strong using short fibers as they would be using the original filament material. Handling, cutting, and managing fiber reinforced polymer material sheets, including carbon fiber, requires special safety precautions, specialized cutting equipment. Fabricating partial components ready for molding or resin application to create composite panels, such as those for vehicles, requires many steps and processes.

The advantages of knitted fiber reinforced fabrications are the unique performance characteristics of knits, whether warp knit, or weft knit structures, to drape and conform to complex shapes in tools and/or molds. The structure of a flat V-bed knitted fabric can adapt to the mold configurations, without puckering, bunching or gathering like woven fabrics, non-woven fabrics, and lamination structures. The disadvantage of conventional roll good knitted reinforcement structures is that roll knit goods that are currently used typically do not offer stiffness and/or alignment of fiber in any direction, horizontally, vertically, or diagonally.

Stitching multiple types of composites together is typically done while fabrics are without resin impregnated or with materials in the pre-resin impregnated format. The disadvantage is a high risk of damage to the fibers by sewing with an equally abrasive reinforcing fiber.

From the perspective of manufacturing, utilizing multiple composite materials, which have different properties and performance features, then cutting, seaming, and assembling those multiple materials into a vehicle panel, can be a wasteful, labor intensive, and inefficient practice. For example, the various materials utilized in a conventional vehicle panel may be obtained in different widths, lengths, thicknesses, densities, and packaging arrangement. The materials may be from a single supplier or many suppliers all over the world. Accordingly, a manufacturing facility must coordinate, inspect, inventory, and stock specific quantities of ready-made roll and/or panel good materials with each material being a static design created by raw material suppliers or in the case of fiber lay-up, the process may have different variations depending on the skill of the person doing the lay-up, fatigue, experience, and other human error. The various raw good materials may also require additional machinery to prepare, inspect, or they may require sub-assembly line techniques to cut or otherwise prepare the material for incorporation into the vehicle panel. In addition, incorporating separate materials into a panel may involve a plurality of distinct manufacturing steps requiring significant labor, space, and resources. Additionally, in the composite manufacturing process it is generally desirable to minimize the number and types of materials in the panel, particularly in three-dimensional fiber reinforced vehicle panels. Fewer materials reduce costs due to extra lay-up, layering, sub -assembly creation, risk of damage in each step prior to final lay-up, and increased efficiency, given that each component must be separately curated, coordinated, and prepared for an already labor-intensive process.

The typical fiber reinforced composite panel manufacturing process encompasses the steps of selecting the material, cutting the base material components to shape, layering the thickness in strategic areas of abrasion and impact, joining edges, cutting holes, creating three dimensional super-structures, laminating by adhesive or glue any added pieces forming the areas to attach hardware required by the design, shaping the polymer reinforcing panel over and/or in a form and/or mold, heat-setting the materials and adhesives. Modern vehicle designs, principally organic and geometrically shaped fiber reinforced three-dimensional vehicle panels, require numerous pieces and complicated manufacturing steps, leading to high labor costs, lengthy time frames for sourcing materials, fabrication compatibility issues, seam compatibility issues, production waste in the cutting process. Combining separate materials into a cut and assembled type of complex composite panel involves multiple distinct manufacturing stages requiring multiple labor actions and activities. Employing a plurality materials and seaming techniques, bonding agents, in addition to a plurality of shaping techniques, may for example, also make the composite panel heavier, and resulting in an overall vehicle that is less fuel efficient, less aerodynamic, less functional, and less aesthetically pleasing to both the designer and the end user.

Two specific categories of molding processes use fibers: wet lay-up and dry lay-up. In wet lay-up, fibers are applied to a form and resin is poured and brushed into the reinforcing fiber or textile. In dry lay-up, resin prepreg pre-impregnated fibers are used with resins already absorbed in advance of placing into a mold. Dry layup employs high temperature and pressure to harden the pre-resinized fibers in the shape of the mold. Dry lay-up delivers better penetration of the resin and more uniform resin thickness than the wet lay-up system.

Conventional methods of manufacturing fiber reinforced polymer matrix panel structures, such as those used for vehicles, currently use labor intensive processes to achieve three dimensional shapes with finished edges, seams, join points and closure points to achieve composites having high strength to weight properties and other properties including high temperature resistant applications. According to current manufacturing systems, those large two-dimensional fiber reinforced panels are cut and subjected to heat and pressure to form the three-dimensional shape. Aligning fibers in a multiplicity of specific and measured directions on the X, Y, and Z planes, consistently and repeatedly, is challenging.

Additionally, the current manufacturing processes require handling and manipulation of loose fibers, cut or uncut rovings, and yarns which are flocked onto molds, or laying woven fabric sheets, knitted fabric sheets, non-woven mats and/or bats into molds, or handling and cutting large cumbersome two-dimensional composite panel, which are shaped, using specialized tooling for cutting and assembling processes.

Current FRP composite panel components are formed by flocking a mold structure with cut fibers or layering plies of woven mats, bats, or mono-tensioned knit material of homogenous structure, applying resin and molding, or cutting two-dimensional woven sheets of homogenous fiber reinforced materials, molding the cut parts to one or more curves, and seaming the elements, where each seam represents a join. Each facet and/or plane is created by bending cut and joined pieces of the two-dimensional FRP composite sheets around the curves of a vehicle. If the vehicle is small and has tight curves, such as a drone, boat, or smart car, utilizing woven two-dimensional sheets of homogenous fiber reinforced materials poses several challenges. First, woven FRP materials align fibers in two directions, warp and weft horizontal and vertical. To achieve more than two dimensions the FRP sheet needs to be bent molded and/or other material needs to be stacked and/or applied. Second, cutting, dynamic tensioning of bending cut pieces, and joining edges of cut pieces, takes considerable equipment and effort. Creating the desired FRP shape may take several after processes to structure the two-dimensional FRP parts. Additionally, finished two-dimensional FRP panel sheets made with epoxy resin cannot be bent to hold a curved shape, due to the panels not being heat formable thermoplastic. A limited amount of curvature can be permanently applied to a carbon fiber reinforced polymerized panel sheet "graphene reinforced polymer" and in one direction, using high heat over two-hundred degrees Celsius. Simple curves, such as a cylinder shape, can be applied to a carbon Fiber Reinforced Polymer panel sheet of carbon fiber. However, applying a panel sheet of carbon Fiber Reinforced Polymer to a complex curve such as a sphere, as would be needed in a pod shaped design is not possible. Fiber reinforced panels must be cut and pieced together to fit shapes. Currently, there are several methods to cut FRP sheets, ready for shaping. Cutting polymerized composite sheets presents special handling and safety concerns due to the cutting process expelling loose fibers into the environment. Although most fiber reinforcing materials are not toxic, loose fibers are an irritant to skin, lungs, and eyes. Cut edges may be very sharp, and have splinters, creating additional handling concerns of sheet panels and cut pieces. In cutting carbon FRP panel sheets with a CNC machine, highly experienced skills are required. Yet, it is difficult to hold the sheets in the machine, which results in handling issues described above, potential damage to the FRP sheets themselves, and a high potential for defect rates in cut parts. Die cutting carbon FRP sheets also requires highly-skilled experienced operators. Water-jet equipment for cutting carbon FRP sheets also requires, expensive complex machinery and highly-skilled experienced operators. Specialized adhesives are required to seam FRP panel pieces including carbon fiber cut pieces. The seaming process adds significant time and effort due to time required for adhesives to dry thoroughly. Moisture from adhesives react with polymer resin, causing the fiber reinforced part to bubble over time and/or the seam to fail.

Third, joining two-dimensional planes may result in potential fail points. Seams in common materials create potential failure points. Besides requiring specialized materials, special adhesives, extra time, and operator skills, seaming stiff materials such as composites, which want to revert back to their sheet form, are difficult to work with, handle, cut, and seam. Problems with seaming may not arise for some time after the fiber reinforced cut parts are already functional in an assembly. Fourth, joins in two-dimensional FRP sheets create potential thick or thin spots in the reinforcement as well as creating potential aesthetic defects and potential failure spots in the part. Fifth, the cutting and fabricating the two-dimensional FRP material itself, creates significant waste of nearly indestructible material, which may not be able to be recycled. Sixth, additional materials or strengthening parts need to be applied in separate processes taking additional assembly time and equipment. Any additional structure elements or reinforcement elements layered onto the woven panel require one or more sub-assembly processes, prior to the final forming process. The parts applied may present added potential failure points. Aesthetically, the additional may not lend themselves to a streamlined and aerodynamic look and appear clunky. Flocking a mold structure with cut fibers may create a smooth structure, but the panel strength requires buttressing and or additional structures to be applied for adding strength to large areas. The orientation of the fiber is subject to individual users' skills, and each sequential unit is also subject to individual users' skills, fatigues, environment and ability to duplicate repetitive processes accurately. Similarly, layering plies of woven mats, bats, or mono-tensioned homogenous knit material structure is also subject to individual users' skills, fatigues, environment and ability to duplicate repetitive processes accurately, applying resin and molding. Rudimentary three-dimensional knits used in reinforcing current composites provide better drape to fit the shape of a mold, but are typically knit as individual sub assembly components, which are later assembled. Similarly to flocked cut fibers, large areas of three-dimensional fiber reinforcing knits require buttressing and or additional separately knitted structures to be applied for adding strength to large areas. Document WO2016144971A1 discloses a composite product made from a seamless knitted perform. Having regard to a method as defined by claim 1, this document describes a method of manufacturing a fiber reinforced polymer composite panel comprising a plurality of reinforcing structure portions, the method comprising: performing a knitting process on a knitting machine to produce a three-dimensional reinforcement knit structure having a unitary construction, wherein the knitting process knits the reinforcement knit structure to a predefined three-dimensional shape smaller than the final panel product by knitting to shape one or more reinforcement strands to form the reinforcement knit structure so as to fit a mold, ready for a molding and/or resin application process, wherein the one or more reinforcement strands comprises polymer reinforcing fibers, wherein the reinforcement knit structure comprises the plurality of reinforcing structure portions comprising: a leading edge area; a top edge and a central area,wherein each of the plurality of reinforcing structure portions is knitted contiguously into shape through the knitting process and is connected to another portion by knitting stitches that are generated in the knitting process, and performing a polymer composite process using the mold to transform the reinforcement knit structure into the fiber reinforced polymer composite panel. Document DE3937406A1 discloses a flat-bed three-dimensional knitting method using needle control. Document GB720687A discloses a method of making helmets and hollow articles by superposing a plurality of knitted shapes. Document WO2010142608A1 discloses tubular or hollow-body-shaped knitted fabrics.

### BRIEF DESCRIPTION OF THE DRAWINGS

The embodiments can be better understood with reference to the following drawings and description. The components in the figures are not necessarily to scale, emphasis instead being placed upon illustrating the principles of the embodiments. Moreover, in the figures, like reference numerals designate corresponding parts throughout the different views.
FIG. 1 illustrates the composition of a composite material.
FIG. 2 shows different reinforcement fiber orientations in composite materials.
FIG. 3 illustrates a knit-reinforced composite.
FIG. 4 shows common carbon fiber weaves resulting from a knitting process.
FIG. 5 shows the loops and stitches formed in a weft knitting process.

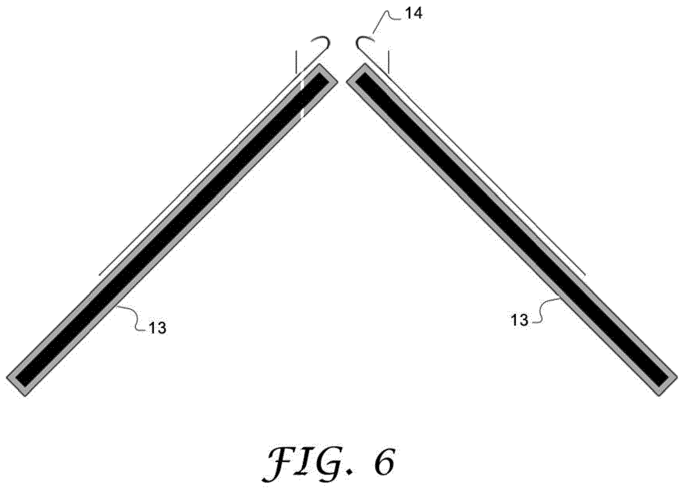

FIG. 6 shows the needle beds and needles in a knitting machine.

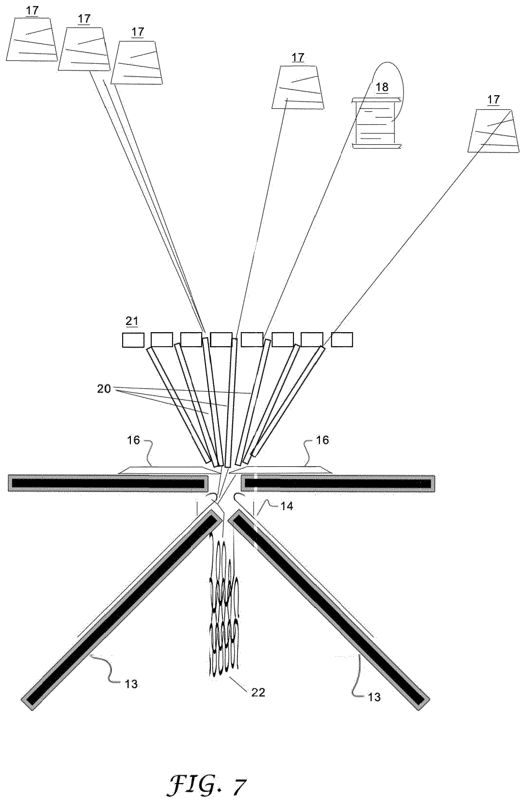

FIG. 7 shows the configuration of two needle beds on a knitting machine.

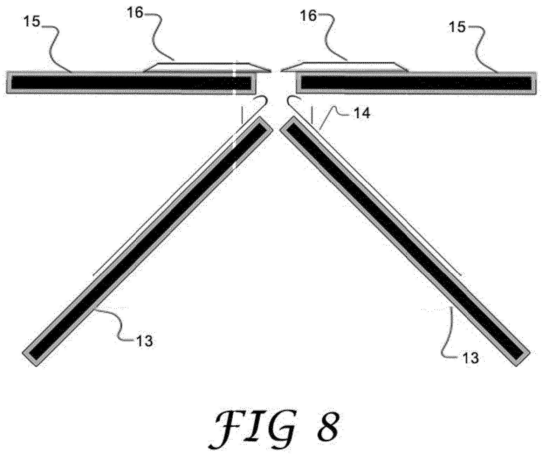

FIG. 8 shows the configuration of four needle beds on a knitting machine.

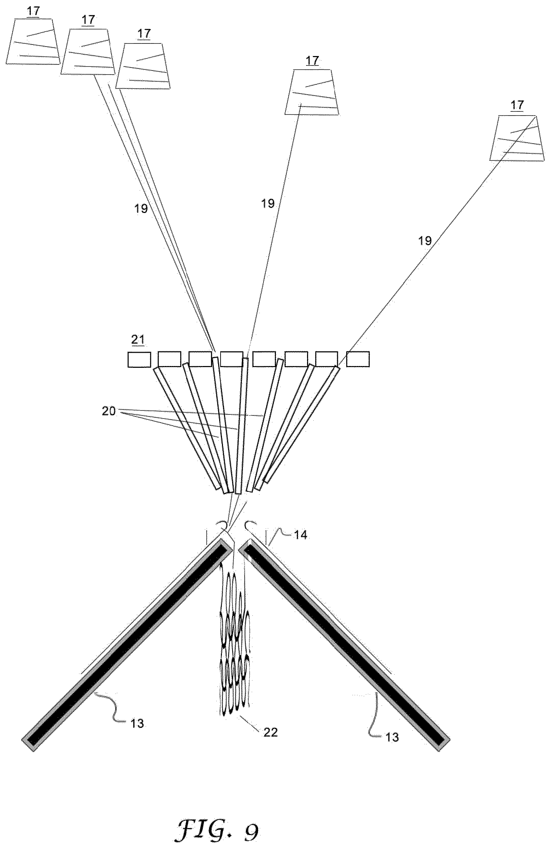

FIG. 9 shows the configuration of a knitting machine with strand feeding.
FIG. 10 shows a front view of an electronic knitting machine.
FIG. 11 shows a right side view of standard stop motions on an OEM feeder.
FIG. 12 shows a left side view of standard stop motion control on the OEM feeder.
FIG. 13 shows a bottom view of standard stop motions on the OEM feeder.
FIG. 14 shows various textured knit structures that offer different performance characteristics.

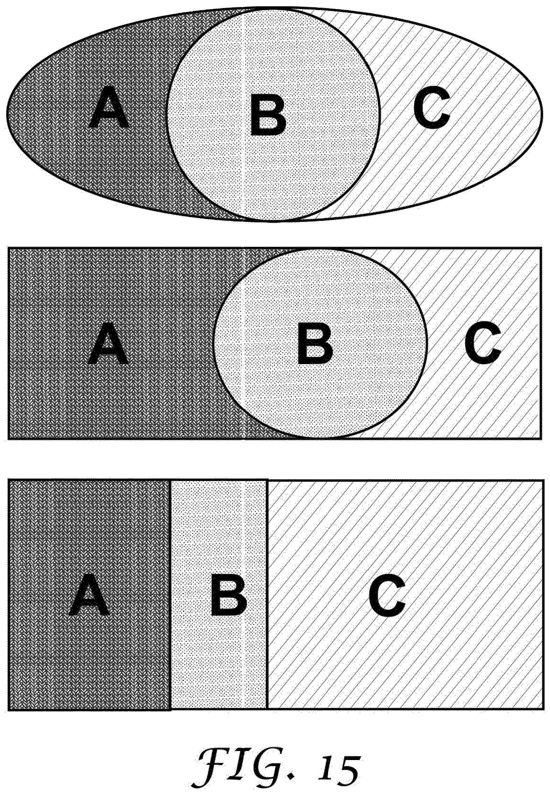

FIG. 15 shows an exemplary intarsia structure generated in a knitting process

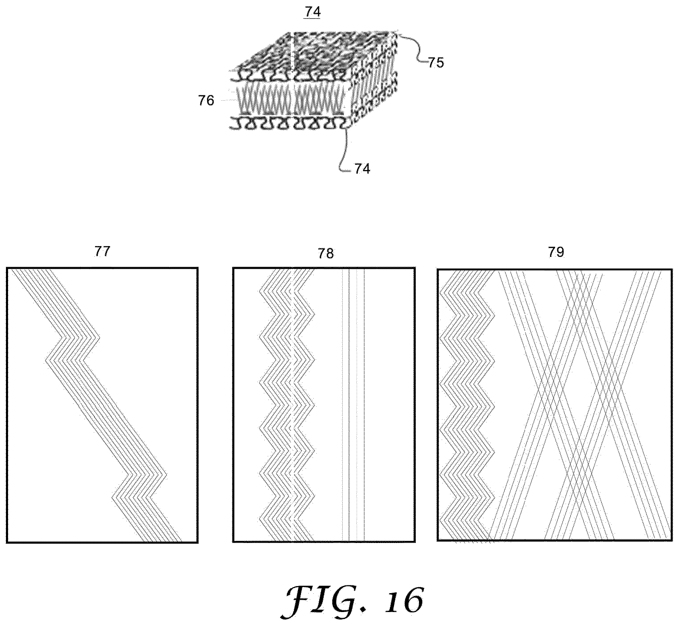

FIG. 16 shows an exemplary warp insert and spacer structure generated in a knitting process
FIG. 17 shows the arrangement of multiple spool devices on an exemplary knitting machine

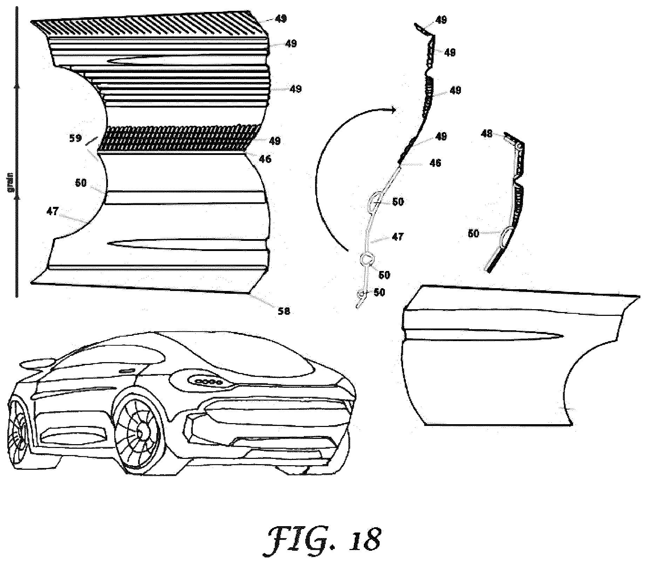

FIG. 18 shows exemplary multi-functional knitted structures in a vehicle panel construction obtainable with an embodiment of the present invention .

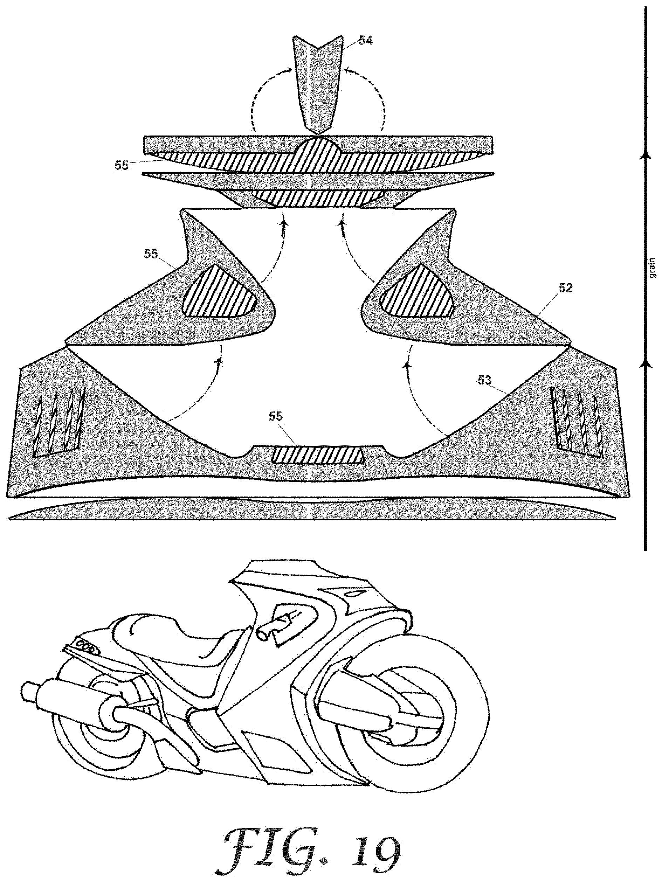

FIG. 19 shows wedge structures knitted from polymer reinforcing fibers for use on a motorcycle obtainable with an embodiment of the present invention.

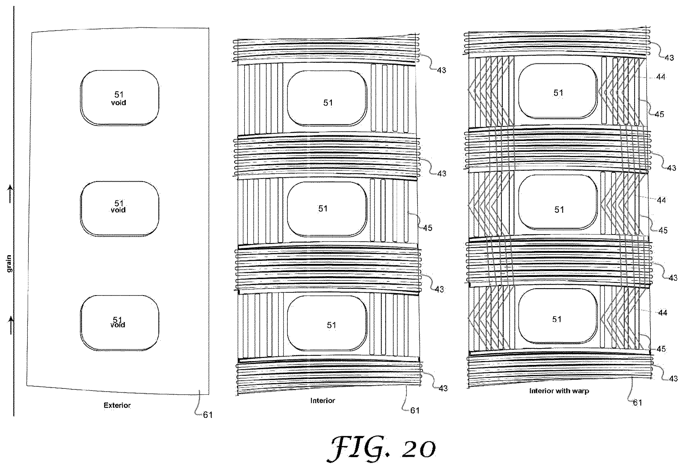

FIG. 20 shows exemplary aircraft panel with voids, vertical inlay and warp inlay, that are generated in a knitting process according to an embodiment of the present invention .

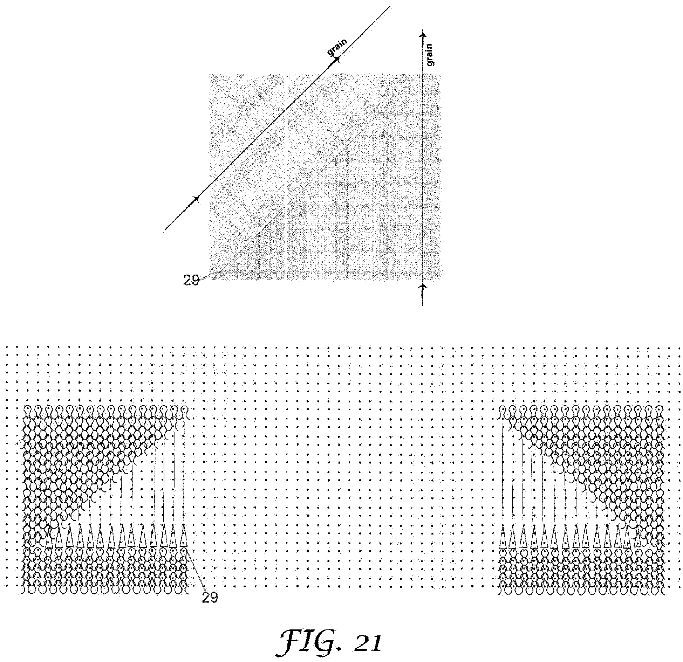

FIG. 21 shows short row narrowing inside miter resulting from a knitting process.

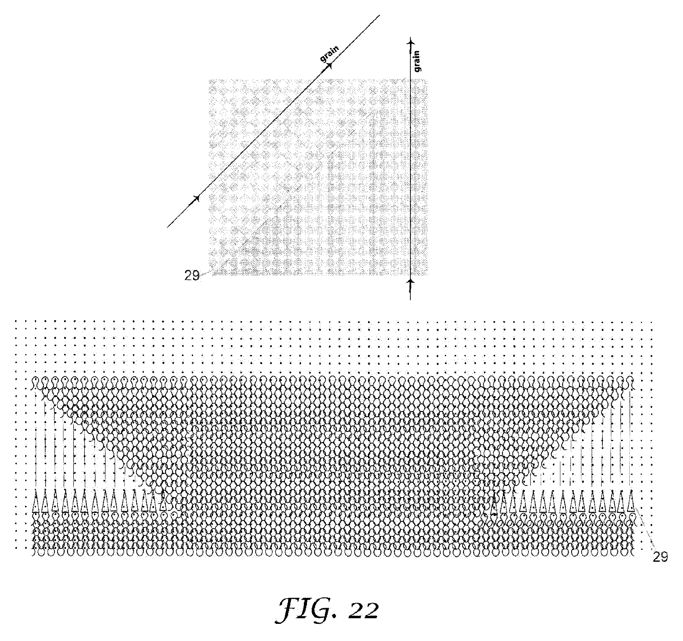

FIG. 22 shows the short row additive miter in a knitting process.

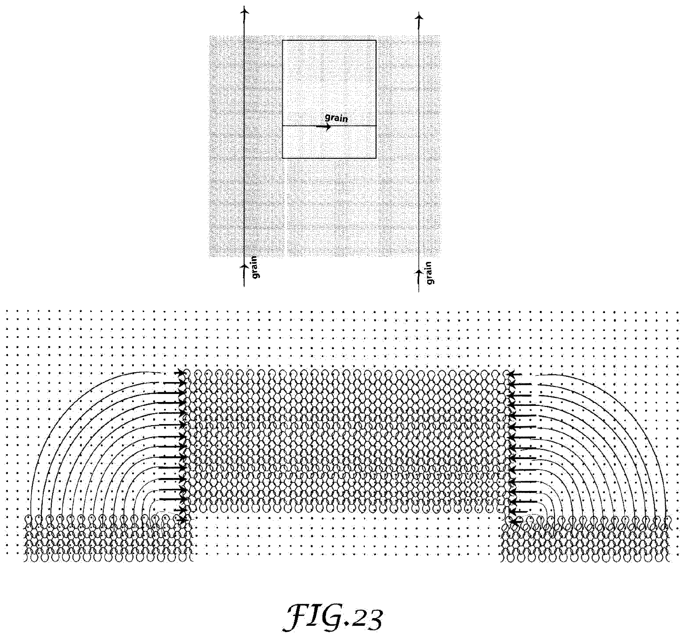

FIG. 23 illustrates the knitting stitch paths of an exemplary insert structure to a panel construction single or double bed structure obtainable with an embodiment of the present invention .

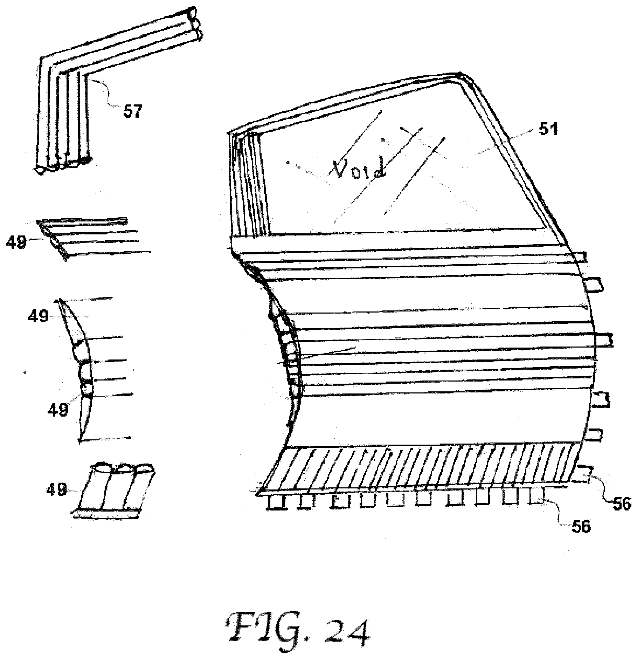

FIG. 24 shows an exemplary knitted FRP vehicle panel with appendages, void and miter of corrugations (double bed fabrics) that is produced from a knitting process in accordance with an embodiment of the present invention.

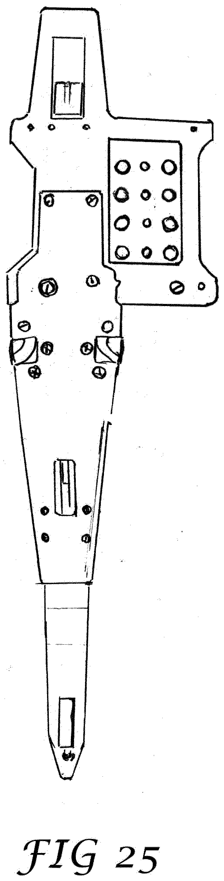

FIG. 25 shows the configuration of an exemplary autarkic feeder.

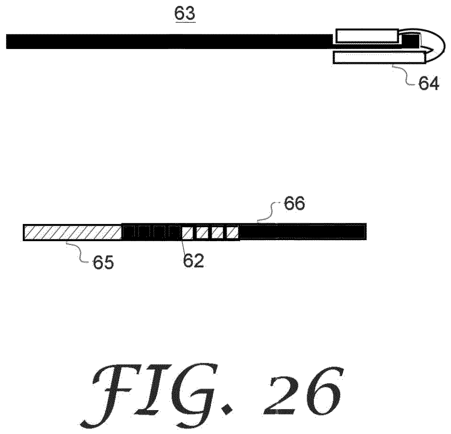

FIG. 26 shows an overlapped panel join and spline edge that are created in exemplary knitting process

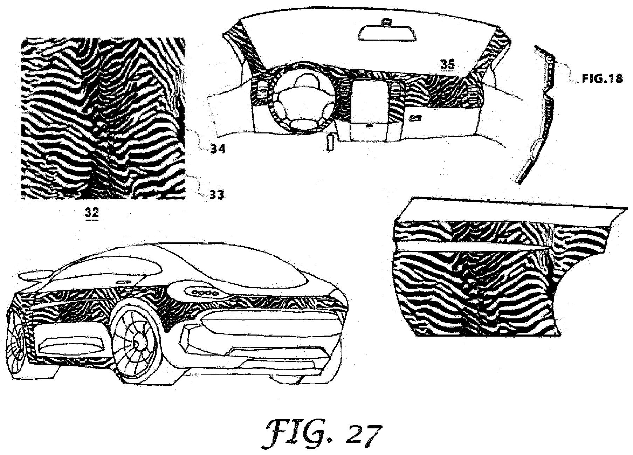

FIG. 27 shows exemplary three-dimensionally shaped jacquard panels using two colors of polymer reinforcing fiber that are generated in a knitting process in accordance with an embodiment of the present invention.

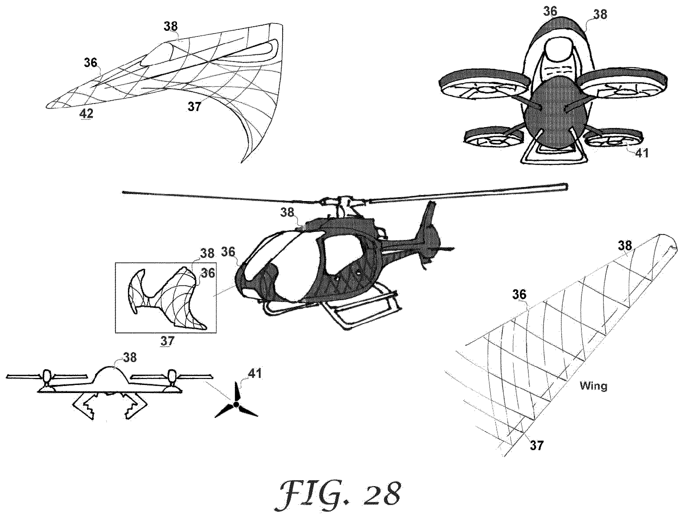

FIG. 28 illustrates various exemplary panels used on aircraft that have carbon fiber structures manufactured through an exemplary knitting process in accordance with an embodiment of the present invention.

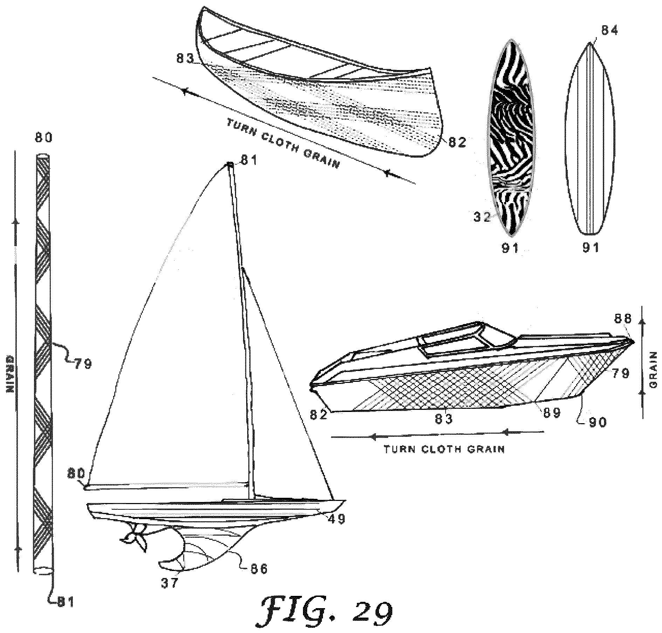

FIG. 29 shows fiber reinforced panels in a marine application produced in a knitting process in accordance with an embodiment of the present invention.

### SUMMARY OF THE INVENTION

The invention provides a method of manufacturing a fiber reinforced polymer composite panel according to the appended claims.

Embodiments of the present invention provide a method of knitting a polymer reinforcing structure to a shape as predefined in the final product, which allows easily integrating specific materials into particular areas, enables transition or blend the reinforcement, conductive properties, or other specific performance features, into regions for reinforcement, conductive properties, or other specific performance features, into regions for enhanced specific function performance as well as manufacturing efficiency. For example, an exemplary knitted polymer reinforcing structure is capable of reinforcing against ballistics or other forms of damage; providing seamless flex; creating areas of corrosion resistance and/or other performance features; better securing the panels to a chassis; creating cavities for insertion of after-process hardware; embedding heat shielded wiring in the knit process; creating attached dimensional reinforcing structures in areas; minimizing waste of materials; better managing production materials and supply chain; streamlining mass-production process; reducing costs; allowing for simplified mass-customized production structures, and ease of implementing manufacturing applications.

Embodiments of the present invention allow for one or more knitted components to be formed exclusively in a knitting process and applied to a panel lay-up, ready for a molding or resin application process. Creating three-dimensional interlocking and multilayered reinforcing fabrications, which are knitted or woven, advantageously create stronger matrixed composites than laminated composites in relationship to thickness of the structure.

Embodiments of the present invention utilize fiber reinforcing polymer (FRP) matrices to build three dimensionally knitted-to-shape polymer reinforcing panels and panel components, with dimensional reinforcing structures knitted mathematically and proportionally arranged and/or reinforcement materials mathematically and proportionally arranged in a unitary construction. A resultant panel or panel component provides strength, cross structured performance characteristics, and can be made lightweight, which is critical to smart vehicles, aerospace transportation, electric vehicles, and other modes of vehicle transportation.

An exemplary knitting process can generate a composite polymer matrix component panel in the form of a unitary construction of a three-dimensionally weft knitted polymer reinforcing fiber structure. In some embodiments, in the knitting process, one or more stiff materials are drawn into a V-bed weft knitting machine to create a polymer reinforcing panel structure and any additional knitted textile elements with completely finished edges. The knitting process is performed exclusively on the knitting machine, with nearly zero scrap waste of the strands used to fabricate knitted fabrics.

In the same unitary panel construction, the knitting machine may create thick and thin zones, dimensional structures, such as pockets, tunnels, channels, voids, cavities, warp structures, corrugations, spacers, additional layers, portions of layers and appendage elements as functionally required as well as aesthetically desired elements such as jacquard designs, three dimensional textures, surface interest stitch design patterning, and etc. The knitting machine can incorporate functional strands in the same knitting process to strategically enhance the performance and/or characteristics of the fiber reinforced polymerized composite material. For example, the functional strands can be silicon, high heat resistant ceramics, vitreous silica, thermo coupling wires, braids, aramids, para aramids, chain, basalt, insulated fiber optics, insulated wire, silicon rubber, sacrificial materials which dissolve in the forming process, insulated auxetic materials, micro-fibers, nano-fibers, synthetic, and other traditional fibers for aesthetic or performance features. Dependent upon specific performance needs of the resultant composite structure, strengthening, heat dissipating, and vibration dampening, materials may be mathematically arranged for specific functions in three dimensions proportionate to the length, width, and dimensional cross sections, spanning the unitary construction of layers and layer components in multiple directions. That is, the resultant composite structure is mathematically and proportionally shaped.

The resulting combination of three-dimensional textile elements is a unitary construction completed entirely by the knitting machine in the knitting process, and is ready for a subsequent polymer resin application and/or a molding process. Knitting fiber reinforcing materials to one or more desired shapes greatly simplifies the final structuring, alignment, and lay up process, where resin is added to the material in a mold, or in the case of resin pre-impregnated materials, one or more embedded heat resistant strengthening and or vibration dampening materials may be knitted into the textile components, and the entire assembly may be molded in an oven or autoclave. The shape of a knit reinforcing structure may be defined by the product design of a panel, a panel portion, a panel component, and/or attached component, etc. The added strategic performance and/or characteristic enhancing materials can survive the resin polymerization process and/or molding process and are thereby permanently embedded in the panel, panel liner, and/or components.

In some configurations, a dynamic feeding system is used for a knitting machine to introduce a variety of polymer reinforcing materials, conductive materials, and other functional materials in creating the unitary construction.

In some embodiments, a polymer reinforcing fiber structure for a panel structure and/or components can be produced by a knitting process, including a unitary construction, in which a single or multi-layered fully-shaped three-dimensional polymer reinforcing fiber structures for a composite panel, such as a panel utilized in vehicle assembly, liner, and/or component are knitted and attached in the same knitting process. The polymer reinforcing fiber structure is knitted and finished on a V-bed flat knitting machine to the predefined shape with one or more layers, each having one or multiple performance zones, each zone made up of one or more, two-dimensional or three-dimensional stitch structures that are mathematically arranged in proportion to the size, shape, configuration, and performance nature of the layer or layer portion in the composite structure, and the combined performance needs of the resultant composite panel. Each layer may also include additional materials or structures arranged in a manner to provide desired functional or aesthetic attributes. The total layers, portions, and appendages when plied, gathered, and or folded together create the three-dimensional panel ready for matrix application or in the case of resin pre-impregnated material, the molding process. The polymer reinforcing fiber structure may include a fully shaped integrated knitted insert with a grain in a steep right or obtuse angle. The insert is shaped, configured and manipulated into place exclusively by the knitting machine, requiring no seaming or joining to attach the insert to the main body structure. Utilizing a knitting machine to automatically close or seal the edges, and to incorporate a functional design or pattern lines, or other specific performance features, creates a unitary construction with no seams and nearly zero waste.

According to embodiments of the present invention, a composite structure having a polymer matrix material is produced through a knitting process, which is reinforced by fiber construction. In some embodiments, a three-dimensional V-bed knitting process creates multiple structures in the same panel structure and utilizes various materials strategically, and/or mathematically and proportionally, placed for specific characteristics to improve the composite panel manufacturing process and or function of the resultant panel, such as materials strategically and mathematically placed proportionally placed by the knitting machine to add strength to specific areas, temporary supporting sacrificial material that disappears in the molding process, material that creates flex joins or live hinges in the knit structure, material that expands to support structures with the addition of heat and/or steam, shape memory material, vibration dampening material; materials that create voids or cavities of shape, dimension, and positioning in the resultant composite structure; materials strategically placed to shield RF or EF; heat resistant electronic cables and/or thermo coupling wires that permanently situate connection spots in the resultant composite panel ready for after process hard ware components such as electronics, solar elements, power sources, navigation, lidar, radar, cameras, controls, acoustic amplifiers, screens, monitors, or other devices. According to some options, the knitting machine may utilize a knit program to incorporate one or more pocket structure knit into one or more layers, where a component is inserted between the needle beds of the knitting machine and into the pocket during the knitting process, manually or robotically, the knitting machine then continuing and sealing the component into the knit structure. The component may be any component, for example an electronic component, an RFID sensor, a ballistic plate, a foam, computer chip, a printed circuit board, a battery, or other component. The pocket may be completely closed or have an opening, void, flap, or other structure allowing access to the embedded component.

The knitting process can be controlled by a computer program to render specific structures of differing constructions, varying thicknesses, aesthetic or functional openings, functional structures (such as pockets, tunnels, channels, corrugations), spacers, tubes, flaps, voids, and dimensional reinforcing structures. Appendages, sub-structures, super-structures, liners, and embedded wiring, additional reinforcement, and/or ballistic materials, may also be knitted, inlaid, inserted, or weft knit warp inserted in the same knitting process. Appendage, liner, portions of layers, inserts, and/or reinforcement structured fabric may be gathered, aligned, plied folded over, and pressed together lining up calculated zones to constitute a strategically shaped and plied group of layers or zones to create the polymer reinforcing three-dimensional panel structure or one or more appendage structures, liner, portions of layers, inserts, and/or reinforcement structured fabric may be separated into smaller panels by knitting in different strands connecting successive layers of the polymer reinforcing panel in a sequential manner.

An exemplary three-dimensional polymer reinforcing structure may be used in vehicle assembly and may be generated by utilizing a V-bed knitting machine. The knitting process advantageously reduces labor costs by shaping the reinforcing fiber in the knitting process; minimizes the number of manufacturing steps in composite formation; minimizes wasted materials from cutting, stacking, assembly and sub-assembly processes; minimizes the number of manufacturing steps from a two-dimensional composite panel; minimizes the number of manufacturing steps in a three-dimensionally knitted composite textile panel, which would otherwise require sub-assemblies, multiple different structures, and seams on various positions on the panel; minimizes the materials handling equipment and floor space required to receive and process fiber reinforced polymer panels. In this manufacturing process only raw material spools are stocked and subsequently processed by the knitting machine. The resulting fiber reinforced polymer panels and/or panel components have completely finished edges and enter the composite matrixing or heat finishing process as a unitary construction.

A polymer composite panel made from a fiber reinforcing structure includes a single piece three-dimensionally-shaped liner panel structure. A single or multi-layered three-dimensional fiber reinforcing structures are knitted to shape with multiple performance zones, and/or including an aesthetic and/or functional fabric face, finished edges, apertures, varying thickness, embedded wiring, embedded sensor, embedded solar cells, embedded ballistic inserts, and/or functional structures such as electronic housing voids, channels, tunnels, pockets, device housing cavities. The knitting process may combine one or a plurality of integrated materials mathematically and proportionally arranged in addition to the base fiber reinforcement material. A knitting machine is utilized to automatically close or seal the edges and incorporate a functional design, aesthetic jacquards, surface design, embedded technology, or aesthetic pattern lines, or other specific performance features, including creating cavities for insertion of after-process hardware; embedding heat shielded wiring in the knit process; creating attached dimensional reinforcing structures mathematically and proportionally arranged throughout the various panel components, thereby creating a unitary construction. The automated processes are advantageously consistent and repeatable in production, and lead to nearly zero waste in the lay-up and polymerization process.

Embodiments of the present invention enable creation of three-dimensionally shaped polymer reinforcing fiber structured panels to be mathematically and proportionally shaped and formed in the fiber reinforcing textile material on a V-bed flat knitting machine, such as those for vehicles, and/or one or more panel liners, and/or one or more inserts, and/or one or more semi-finished components. A panel liner and/or components may be knitted to predefined shapes in a separate process and then attached to the body of the main panel in an after process. Alternatively, the panel liner and/or components may be knitted and attached to the body of the main panel in the same knitting process. In the latter manner, the body of the panel structure or a panel liner or an insert, has no extra seams, seal points or closure points, and is knitted exclusively utilizing the knitting machine without requiring human intervention. The knitting process creates a seamless, three-dimensionally shaped structured panel, such as those for vehicles, as a unitary textile construction, with one or more integrated components. An entire structured panel can be completed exclusively by the knitting machine, ready for the polymerization resin application, or in the instance of resin pre-impregnated stands, the molding process, and then the panel assembly process.

An exemplary knitting process can result in a strong amorphous oriented textile structure, where fibers are knitted into a three-dimensional shape and the knit may be varied and structured into zones for the desired end use. The resulting textile construction is further processed with the addition of polymer into an FRP composite and may be co-molded with other materials to create functional zones and/or processed as a fiber, which is pre-impregnated with resin pre-preg and molded into shape with heat and pressure.

The fiber structure may be curved multi-directionally in the knitting process into a void to receive, support, and/or link with other hardware to hold the panels in place. Varying the fibers mathematically and proportionally in zones to map desired functions may create a flexible, dynamically structured, and multi-functional composite panel, which may also be very light weight as compared to the current process of fabricating homogenous two-dimensional sheets of composite material, flocked cut fiber lay-up, bat lay-up, or current rudimentary three-dimensional knits used in reinforcing current composites. Knitting polymer reinforcing fibers to shape provides several advantages. Exceptionally strong reinforcement can be achieved by creating small arches, in what the trade calls an "amorphous orientation" which spread the reinforcement in multiple directions simultaneously. Rather than just two directions, warp and weft as in woven FRP sheets, knitting aligns fibers into: loop structures, V-tuck structures, corrugations, corners, boxes, tunnels, channels, ellipses, and other three-dimensional aesthetic and/or functional configurations, including complete panel shaped configurations. Further, the same strands of material run through the panel, liner or component appendages, bending in multiple directions. Knitting fibers for reinforcing a polymer to shape on a V-bed knitting machine eliminates the need for cutting and requires only the knitting machine to create the dimensionally shaped polymer reinforcing fiber structure. Furthermore, fibers for reinforcing a polymer are knitted mathematically and proportionally to a more aerodynamic, anatomical, complex curved shape or to the shape of the mold and also reinforced dimensionally and or cohesively in a mathematical and proportional manner. This eliminates or minimizes the need for joins, mitigates undesirable flat sections, and naturally drapes to hard curves in shaping as compared to two-dimensional sheets, flocked cut fiber lay-up, bat lay-up, or current rudimentary three-dimensional knits used in reinforcing current composites.. There is no need for short term or long-term monitoring of seams as knitting to shape eliminates most need for piecing and thus eliminates those seams. Still further, knitting fiber reinforcing material to desired shape and structure uses only what is needed to create the part. The edges are completely finished, requiring no cutting. Still furthermore, adding additional functional materials to a polymer reinforcing fiber in the knitting process embeds the materials in the structure at the same time and in the same process. Additional assembly equipment, creating sub-assemblies, bundling, and coordinating for assembly may not be necessary to create the reinforcing structure complete with the embedded additional materials, thereby eliminating additional processes, joins, and potential failure points. Aesthetically, the additional materials may be placed on the surface, on the interior, or internally inside the main body structure in the same knitting process.

A knitting process according to embodiments of the present invention can eliminate the need for most seaming in both the textile creation process and the polymerization process by creating a multi-structured fiber configuration in a true unitary textile construction, shaped entirely by the knitting machine, ready for the polymerization process. It also eliminates waste in both the textile creation process and the polymerization process by creating a stable finished panel in a true unitary seamless textile construction shaped entirely by the knitting machine, ready for the polymerization or molding process, and requiring no cutting and joining of composite components.

### DESCRIPTION OF THE INVENTION:

According to embodiments of the present invention, polymer reinforcing textile fabric structure to support a panel, such as that utilized in vehicle, may be created on a V-bed knitting machine as single bed "jersey," double bed fabric, spacer fabric, pointelle, intarsia, net fabric, multi-dimensional structure, attached insert structure, weft knit warp structure, or other knitted construction or combination of knitted structures. Besides fiber reinforced polymers (FRPs), additional aesthetic or functional material strands can be combined with the fiber reinforced polymer material, such as natural fibers, metalized fibers, wire, filaments, chain, silicon, vitreous silica, ceramic, elasticated, synthetic and other traditional fibers. Multiple FRP materials may be used inthe knitting process. Including hemp, flax, linen, glass, basalt, carbon fiber "graphene reinforced polymer", nano-composites, nano materials, optical fibers, FR materials, biodegradable accelerants, and others, which may be polymer extrusions, pre-matrixed yam constructions, filaments, copolymers, bi- components, or other strand compositions or combinations. These materials can be fed into the knitting machinery to create three dimensional composite matrixed polymer reinforcing panels and can be knitted or inlaid into the shape, e.g., a shape predefined as in a final product.

In some embodiments, a three dimensional fully shaped polymer reinforcing panels may be knitted from resin impregnated pre-carbonized strands. A binder strand may also be twisted with the carbon fiber. A knitting process results in a three dimensionally shaped polymer reinforcing fiber composite matrix panel, ready for both dry lay-up heat processing, and wet processing resin application. The knitted panel having no seams, join points, closure points, or human intervention. In some embodiments, the polymer reinforcing fiber panels may be knitted from oxidized acrylic strands and then heated to carbonize the strands, and a resin injected in a separate process. In some embodiments, the three-dimensionally knitted carbon fiber fabric panels may be embedded in a carbon template with additional carbon vapor deposition to form the shaped polymer reinforcing panel and then heated to carbonize the yarn.

Knitting on flat bed weft machines offers opportunities that are not possible in weaving, including compound curves and knitting to shape on a knitting machine, which is currently available up to ninety-six inches wide. The V-bed three-dimensional knitting process may create multiple structures in the same panel, digitally programming specific structures of differing construction, varying thickness or open spaces, and varying stitch density where required in a straight grain, turned cloth, bias, or multi-directional manner.. FIG. 18 shows exemplary multi-functional knitted structures in a vehicle panel construction obtainable with an embodiment of the present invention. In some embodiments, openings, pockets, appendages, ventilation, live-hinges, waste separation 46, sub-structures, super structures, and liners 47 may be knitted in the same knitting process.

One or more appendages, liners, or reinforcement structured fabric layers may be aligned and pressed together into zones to constitute a strategically plied group of layers 48 or zones to create the strategically shaped three-dimensionally panels. Such panels can be used for vehicles can may be separated into smaller individual components by knitting in separating strands and connecting successive layers of the three dimensionally shaped unitary panel structure 61. Voids (51 in FIG. 20), such as complex window element or hardware elements, may also be created through the knitting process and may utilize sacrificial yarns. FIG. 19 shows dimensionally reinforced wedge structures knitted from polymer reinforcing fibers for use on a motorcycle front panel according to an embodiment of the present invention. FIG. 20 shows exemplary aircraft panel with voids, vertical inlay and warp inlay, that are generated in a knitting process according to an embodiment of the present invention .

Finished edges can be knitted around one or more open areas of varying shape. Also can be included aesthetic or functional structures such as pockets, tunnels 50, and channels. The components may be knitted and inserted with hardware, electronics, ballistic panels, or other functional components. Complex curves may be knitted to fit the mold. Spacers may add strategic corrugation 49 to one or more areas of a curved structure, integrating a stiffened axial load. Jacquards may be knitted in fiber types or colors to add aesthetic design. The liner may be attached to the unitary construction by a live hinge 46. An important benefit is that fibers may be knitted to required dynamic performance structures and the shape of the mold in three-dimensions (FIG. 19), saving cutting, minimizing lay-up time, and eliminating wastage. Curves, wedges 52, and/organic shapes, attached dimensional reinforcing structures, cavities for insertion of after-process hardware, may be knitted using the afore-mentioned short rowing technique 53.

In some versions, a four-needle bed machine is used which allows creation of an insert 54, e.g., up to seventy-two inches wide. The grain of the fabric using the insert technique as previously described, turns ninety degrees in the finished polymer reinforcing structure. This fiber alignment may lend strategic strength, as the shape is created planar, convex, or concaved completely by the knitting machine. Inserting a panel in this manner is not limited to one stitch wide, by one stitch high shaping, provided by standard fully fashioning. FIG. 19 shows a sequence of two-dimensional and three-dimensional structures, which are knitting in sequence by the machine from the bottom upward. The top structure, an insert 54, is then transferred to the unitary structure and becomes the top most part of a three-dimensional structure fitting the mold, for in this instance the front part of an intricate motorcycle.

Materials may also be knitted into components with specific performance characteristics, such as Kevlar, heat shielded wiring, heating elements, shielded device wiring harnesses, shielded thermo coupling wire harnesses vibration dampening material, heat dissipative material,. These components may be incorporated in the same knitting process to provide function. The knitting process may also create sacrificial materials 55 which disintegrate, evaporate, detach or melt in the molding process. Materials may be knitted in specific areas to resist resin, such as Teflon and other types of fiber. In using resin pre-impregnated fibers, heat resistant materials, such as silicon, may be knitted in intarsia areas to isolated areas of rigidity with areas of ligamental stretch. The heat resistant material is unaffected by the molding process or in the case of un-impregnated or comingled materials, the oven or autoclave. Support fibers may be knitted, which expand when exposed to heat or steam, creating dimension, acoustic insulation, further reinforcement, and or increased stitch density. Density of fibers may be manipulated by the machine into zones, created in a gradient, latticed, layered, weft knit warp insertion or any combination of knit structures. The computer-controlled knitting machine consistently and repeatedly manufactures the same fiber reinforcing parts for as many and as few as desired.

Fully fashioning polymer reinforcing fiber structured panels saves considerable material, which would otherwise be cut away in a cut and sew process, or cut and discarded after polymerization. In fashioning polymer reinforcing fiber structured panels on a two-needle bed flat knitting machine (e.g., as shown in FIG. 11), a typical wedge knitting short rowing technique can be used to tum the grain of a structure miter of two pieces with a void in between. The result is a miter on each. FIG. 21 shows short row narrowing inside miter resulting from a knitting process useful with an embodiment of the present invention. The machine transfers one needle on each row at a time as each row is sequentially knitted, while holding the stitch on the horizontal row 29. By the time the machine gets to the final stitch to be transferred, the final loop has tremendous tension on it.

Similarly, shaping the sides of a fabric, using short rowing to create miters on both sides creates shaping simultaneously, However, the fabric shaping on two-needle bed machines, of current rudimentary three-dimensional knits used in reinforcing composites, using short row wedge knitting, has the limitations of increasing or decreasing by one-needle wide, by one-needle high at a time, creating an acute angle, which is subject to variations in materials. Short-rowing cannot make a right angle. Increasing or decreasing by more than one needle wide by one needle high creates stress on the knitting strand and the knitting needles in pulling a long loop, which spans a space two or more times longer and wider, than the original loop. This results in a fail in knitting and/or a high stress fault line in the fabric that may not endure abrasion, tensile stretch and recovery. Carbon fiber and other fiber reinforcing materials are inherently stiff. Stretching loops of fiber reinforcing material farther than one stitch width at a time may actually cause serious damage to the knitting needles and other parts of the knitting machine. Utilizing this short rowing wedge knitting technique one stitch width and one stitch height at a time creates a polymer reinforcing fiber structured panel, which may require one or more seams to miter and join the sides, completing the polymer reinforcing fiber structured panel's shape, if the sides are greater than allowable for fashioning. Shaping, using this wedge knitting short row technique, typically limits the angle of the grain change in current rudimentary three-dimensional knits used in reinforcing composites, to between thirty-five and seventy degrees, depending upon the material qualities, the angle of the main body grain. Adjacent areas of a polymer reinforcing fiber structured panel in current rudimentary three-dimensional knits used in reinforcing composites are limited by the mechanical transferring constraints of two-bed flat-knitting machinery, and also the structure of stiff fibers, and knitted double-bed fabrics in general. Utilizing this wedge knitting technique short rowing, in current rudimentary three-dimensional knits used in reinforcing composites, there is no transferring of double-bed fabric loops, only adding of new rows of loops in a wedge like shape short rowing, which is a standard and historically used weft-knitting technique. Short rowing distorts the fabric grain on an angle. Increasing or decreasing the degree of the short row angle is limited by one-needle in the X direction by one-needle in the Y direction, as described above. Moving more than this one-needle wide by one-needle high stretches loops and creates potential failure points as also described. In utilizing stiff polymer reinforcing fibers, wires, Kevlar or other aesthetic or functional material strands described herein, there is already limited to no stretch available.

In some embodiments, an insert is knitted in one or more section, adjacent to a side of a portion of knitting to which it is to be attached, and is manipulated by the machine into place in the same knitting process. The loops of the insert travel a very short distance to connect to the side of a portion of knitting. FIG. 23 illustrates the knitting stitch paths of an exemplary insert structure to a panel construction single or double bed structure useful with an embodiment of the present invention. The polymer reinforcing fiber structured panel's fabric grain may change direction ninety degrees or more in the knitting process as the insert is formed. Consequently the stitches appear perpendicular to the main body panel's fabric grain. During this process of creating and insert or other attachment, the double bed loops of the opposing side of the insert are transferred to the additional third and fourth needle bed and then attached to the main body fabric as the shape requires. All movements are performed exclusively by the knitting machine, with no human intervention. Additional non-polymer reinforcing material strands may be combined and comingled with the fiber reinforcing material strands, to obtain additional desired functional characteristics, such as silicon rubber, wires, braids, thermo coupling wires, vitreous silica fibers, silicon, ceramics, basalt, para aramids, insulated fiber optics, insulated wire, aramid fibers, chain, silicon rubber, sacrificial materials which dissolve in the forming process, synthetic and other traditional fibers for aesthetic or performance features. A plurality stitch structures may be knitted into specific areas mathematically and proportionally arranged as needed for the functional performance characteristics required of the particular zone and the overall panel. For example, flat areas may be more densely knitted; a portion may incorporate a net or open structure for ventilation; a portion may incorporate three-dimensional reinforcing structure. Appendages may include aesthetic elements or insulated electronic elements, which may survive the polymerization temperature and process, such as Pelican wire of Florida's 300 C rated wire or other similarly insulated electronic material and/or device. Spacer fabrics, when filled with resin, provide an extremely rigid construction that resembles a corrugation. Corrugated structures 45 may be desired in extreme environments that require strict rigidity and protection. Corrugation may be graduated in thickness, and dimensionally shaped, and or created in one or more isolated areas as an intarsia structure, on a V-bed knitting machine, which is not possible in warp knit fabrics. In some embodiments, utilizing this inventive process, additional reinforcing materials or more complex double bed structures may be knitted, inlaid or 'warped' into the knitted structure to impart even stronger areas of rigidity, conductive materials, interactive materials, or other characteristics to one or more zones of the panel.

An example of adding rigidity is adding spread tow fabric STF materials. STF may be inlaid in the knit structure, reinforcing one or more zones horizontally or vertically as a weft knit warp structure with carbon fiber 'tapes.' Instead of 'bundling' the carbon fibers in narrow and thick tows or slivers, spreading fiber in thin and wide tapes and then inlaying these tapes together within a main body knitted fabric (e.g., STF inlay 43 in FIG. 20) allows ultra-lightweight fabrics to be knitted with these tapes aligning fiber for extra strength where needed. Inlaying, flat STF has several benefits, including creating a desirable mechanical performance, while improving resin impregnation, with straighter more uni-directional fibers where needed and reducing the amount of excess resin. According to embodiments of the present invention, STF fibers may be integrated into a fiber reinforcing structure, horizontally, vertically, and diagonally by knitting, inlaying 44, floating, and tucking, by utilizing the unspooling feed system (73 in FIG. 17). FIG. 17 shows the arrangement of multiple spool devices on an exemplary knitting machine.

The V-bed three-dimensional knitting process may create multiple structures in the same panel with specific structures or combinations of differing constructions, varying thicknesses, and varying resins where required. FIG. 24 shows knitted FRP vehicle panel with appendages, void and miter of corrugations (double bed fabrics). Openings 51, pockets, appendages 56, ventilation, sub structures, super structures, and liners may also be knitted in the same knitting process. The machine may miter fabrics together in desired strategic angles 57. Each panel structure may have several zones, including a leading edge, a central panel and a top edge, which may be knitted in order or partially at different times, depending on construction. Appendages, liners, and/or dimensional reinforcement constructions may be perpendicular or aligned to the grain of the main body structure. A panel structure may be a solitary material structure, or it may have two or more fields of intarsia, FIG. 15 shows an exemplary intarsia structure generated in a knitting process useful with an embodiment of the present invention. In intarsia, a material knits solely in one field but not others. Or a material may knit in some fields, but not all. A field may be inset, surrounded on all sides by one or more fields, or it may extend the length of the panel. There may be two intarsia fields in a panel, or as many as knitting feeders allow. The fields are joined by a knitted, tucked or transferred stitch. One or more edges of each field may be straight or irregularly shaped. One or more edges of the panel may be straight or irregularly shaped.

FIG.16 shows an exemplary weft knit warp insert and spacer structure generated in a knitting process useful with an embodiment of the present invention . The fabric structure, e.g., a spacer fabric, has a face fabric structure 75 and a rear fabric structure 74. The two structures are connected together by a series of tuck X's or V's of an internal material 76. The spacer 76 may have different properties on the face fabric from the rear fabric. The internal material may have a different property entirely form the other two materials, or may be a combination of materials having a specific performance characteristic, when combined. One or more parts of the spacer may contain fields of intarsia, with each intarsia material having differing colors or properties.

A polymer reinforcing panel structure, may itself have additional reinforcing structures. These may be in the form a weft knit warped material inserted vertically, horizontally, and diagonally into a fabric panel or a horizontal inlay. The weft knit warp may knit tuck or inlay in any combination of stitch structures. It may be asymmetrical 77 in a fabric panel. Two warp structures may travel in different patterns 78 and 79 in a panel.

FIG. 29 shows fiber reinforced panels in a marine application produced in a knitting process in accordance with an embodiment of the present invention; the weft knit warp insert mathematically and proportionally to the panel dimensions and function. Warp structures may also overlap each other (shown by overlapping reinforcing group of strands 83 in FIG. 29). A warp structure may lay on the surface of one side of a spacer. It may travel in the middle of the fabric unseen on either face. A warp structure may also travel from one face to another in any direction or combination of directions, dependent upon the desired aesthetic or performance characteristic of the polymer reinforcing structure.

FIG. 25 shows the configuration of an autarkic feeder. The autarkic feeder may knit inlay, create an intarsia field, and create a plaited structure in the same row of knitting. Appendage, liner, or reinforcement structured fabric may be aligned and pressed together into zones to constitute a strategically plied group of layers or zones to create the three-dimensionally shaped polymer reinforcing panel or it may be separated into separate smaller components by knitting in separating strands connecting successive layers of the three dimensionally shaped polymer reinforcing panel. Current needle bed widths of V-bed flat knitting machines are limited to a maximum of ninety-six inches. Dependent on the configuration, the actual width of the knitted panel construction may be wider or narrower in the case of rib layouts creating an accordion-like structure.

To create panel constructions larger than the limit of the needle bed, panels may be joined. FIG. 26 shows an overlapped panel join and spline edge that are created in a knitting process useful with an embodiment of the present invention. FIG. 26 shows one such type of overlapped join 62, where one panel of polymer reinforcing fiber structure 65, has corresponding grooves to a second joining panel 66. The edges of the panels may be finished in a variety of configurations to accommodate many types of joins, to other panels and/or additional hardware such as splines 64. The edge of a panel corresponding to a spline, may have a groove knitted into it, corresponding to the shape of the spline, so as to allow a spline to slide onto the finished FRP panel edge 63, securing the attachment. There are many reasons for attaching splines or other hardware to 3 dimensional FRP panels including for aesthetic purposes.

FIG. 27 shows three-dimensionally shaped jacquard panels using 2 colors of polymer reinforcing fiber that are generated in a knitting process useful with an embodiment of the present invention. FIG. 27 illustrates FRP jacquard panels used in the interior 35 and exterior of a vehicle. Each FRP jacquard panel is made by utilizing a base fiber 33 and an accent fiber 34 which are reinforcing fibers of different colors. The two types of fibers are knitted together to the predefined shape of each panel and arranged into a 2-color jacquard 32.

In addition to aesthetics, there are other purposes for creating geometric patterns in FRP panels. FIG. 28 illustrates various exemplary aircraft designs that are implemented by utilizing carbon fiber structures through a knitting process useful with an embodiment of the present invention. Inlaying, knitting or embedding one or more polymer reinforcing fibers in geometric configurations may not only add to strength of a panel, but may also assist in damping vibration and in dispersing heat and friction build up. For example, the ceramic fiber 36 is inlayed geometrically into a carbon fiber 38 structure using a curved interlacing Fibonacci layout 37, which is mathematically and proportionally arranged by the knitting machine to the friction distribution, airflow across an aircraft wing, and shape of the wing 40. The carbon fiber inlayed with ceramic fiber may dampen vibration and absorb excessive heat.

In another example, the ceramic fibers 36 is inlayed geometrically and proportionally into a spherical carbon fibers 38 structure using a spiral Fibonacci layout for a helicopter or drone nose; the inlay proportional to the direct friction distribution ,airflow and shape. The ceramic fibers inlayed with the spherical carbon fibers may effectively absorb vibration and dissipate heat. The organic shaped aircraft 42, which flies at extraordinarily high speeds, may have a fuselage knit with an elongated spiral layout of embedded vibration dampening material, concentrated at the nose cone and strategically expanded out over the wings, concentrated aerodynamically at points of most air friction. The same principle may be applied to knitting propeller blades 41 three dimensionally to shape on the knitting machine. FIG. 20 demonstrates a detailed view of an exemplary aircraft panel that is knitted to shape in a unitary construction 61 useful with an embodiment of the present invention. The unitary construction 61 is knitted with strategically placed voids 51, corrugated structures 45, horizontal reinforcing inlaid STF material 43, and a group of warp inlay strands 44, which are geometrically positioned in proportion to the length width and dynamic stress points in the panel.

FIG. 29 demonstrates various exemplary panels in marine applications that are knitted to shape useful with an embodiment of the present invention . Illustrated includes a half-gauge tubular knitted mast 81 in which the tubular structure is graduated in diameter 80, with an overlapping warp 79 traveling around the mast pole from front bed to back bed. The sailboat hull 87 has a linear warp reinforcing structure, and fin keel 86 in an organic shape, with a reinforcing warp embedded in a Fibonacci layout 37 in proportion to the curves of the keel. A boat may have two panels joined in an overlapping seam 89, each panel having a grain in perpendicular directions. The hull is knitted turned cloth 82 (with turn cloth grain) with overlapping reinforcing warp strands 83. The bow 90 has a vertical miter 88 and overlapping reinforcing warp structures positioned to absorb water and debris impact and vibration. A surfboard composite structure may be knitted as a half gauge tube to shape 91 with narrowing and widening of a jacquard 32, and also have a reinforcing intarsia tube structured edge. The surfboard has a unitary construction 91 with linear warp reinforcing strands 84. A canoe shell is knitted turned cloth 82, with overlapping reinforcing warp strands 83, strategically positioned for the dimensions of the shell and performance of the shell.

Three dimensionally shaped polymer reinforcing panels may also be knitted from oxidized acrylic strands. Following the knitting process, the knitted structures are then heated to carbonize the strands, and a resin is injected. Any embedded ceramics would survive the process. A three-dimensionally knitted carbon fiber fabric polymer reinforcing panel may be embedded in a carbon template by carbon vapor deposition to form the three dimensionally shaped polymer reinforcing panel, and then heated to carbonize the yarn. A stack of polymer reinforcing fiber matrix fiber fabric vehicle panels may be embedded in a carbon matrix by carbon vapor deposition to form a vehicle panel.

A stack of three-dimensionally knitted polymer reinforcing fiber matrix fabric panel components may be embedded in a carbon matrix by carbon vapor deposition to form a vehicle panel.

After the knitting step, a fully shaped polymer reinforcing panel can be further processed in one of several ways determined by the engineering purpose. Such examples of post process are resin transfer molding modified lay-up molding, pressure molding, compression molding, vacuum-molding amongst others.

The panel is further assembled onto a panel liner and the fully formed vehicle panel material attached to the hardware to form the completed vehicle panel. This process advantageously eliminates all the composite material cutting and greatly reduces the assembly steps. It may eliminate the layering and sub assembly steps of the typical vehicle panel manufacturing process, and greatly reduce the assembly time and costs associated with creating new vehicle designs and retooling the manufacturing process for new designs, new styles and different vehicle types. Rather, the pattern program may be reconfigured for each change in design and a separate knitting program must be used for each desired vehicle panel engineering change order. Similarly, fewer raw reinforcement materials are kept in inventory to accommodate desired changes in styling, structure, and engineering.

A weft or V-bed knitting a fully-shaped three-dimensional fiber reinforced vehicle panel with completely finished edges may only require stocking of the reinforcing fiber yarn strands only. The reinforcing textile fabric is created at the same time as the product is knitted, with only a few strands of waste. The designs, material configuration, textures, structures, performance characteristics, and any combinations of performance or aesthetic options may be changed at will by adjusting, modifying, or reconfiguring or recreating a software program used to control the knitting process.

In some configurations, additional materials are integrated to a panel in various directions through a warping integration. An inlay feeder or an autarkic feeder may create a warp system on a weft V-bed knitting machine. The warp strands inserted may act as a reinforcing group, adding additional strength, additional stretch, conductivity or interactive material such as a shape memory alloy, stretch memory alloy, resistance wire, ceramic, or other specific performance characteristics to one or more zones of the three-dimensional fully-shaped vehicle panel. An example of this is a door panel or a seat back structure requiring no lateral or back-and-forth movement or vibration of the material to maintain the effective structure during use at a multiplicity of velocities.

The machine memory system may also store instructions for automatically knitting additional polymer reinforcing fiber panels individually or in a sequential production manner with multiple panels linked or daisy chained together through a strand. The panels may all have the warp of the modified standard feeders with the crochet/warp pattern guide, containing the plurality of strands. Knitting panels sequentially on the same knitting machine allows for the same lots of materials to be used in the same vehicle, for easy tracing of all materials and components as well as having uniformed material quality, consistency, and the same machine calibrations throughout the vehicle panel system.

As mentioned above, the knitting machine may be any type of sophisticated knitting machine with two or more needle beds. For example, one such knitting machine is a Stoll CMS MTB knitting V-bed machine capable of high-speed intricate weft knitting techniques and operations. Another such knitting machine is the Stoll CMS ADF knitting V-bed machine capable of intricate weft, warp, inlay, Ikat, and other specialized knitting techniques and operations due to the independent nature of the yarn feeder 20 from the knitting cam box.

According to the claimed invention, the knitting machine may mechanically manipulate a plurality of strands of the fully finished three-dimensionally knitted main panel body during a knitting process to form a predefined, three-dimensional shaped polymer reinforcing panel. The knitting process may be an intarsia knitting process in which multiple intarsia elements are knitted and joined to form the various components and structures in the polymer reinforcing panel.

Modern vehicles have organic shapes for function, aesthetics, safety, and aerodynamics. Electric vehicles have a unique challenge to achieve comfort, safety aesthetics and aerodynamics, while delivering a fair battery life range. Material weight impacts the range of mobility, and therefore manufacturers have a great need to develop light weight, safety, functionality and aesthetics. A knitting process according to embodiments of the present invention can produce a strong multi-task functional component made of composite materials and capable of being organically shaped to fit a mold.

A three-dimensional shape of the fully-shaped polymer reinforcing fiber panel may include a concave or convex form disposed, while also creating a void for inserting additional hardware structures, sensors, Lidar, facial recognition, navigation, and other smart features housed in the various panels. For knitting thin components, e.g., narrower than the gap of the needle bed 2.54 mm, the knitting machine may be programmed to stop at a certain part of the knitting process, and the monitor may display an instruction on the screen for an operator or robot to insert a specific component in a designated place in the needle bed gap. When the component is inserted into the designated space, the operator or the robot lifts the handle on the machine and the knitting process continues. This process may be repeated as many times in the knitting process to complete the configuration of the panel. A three-dimensional shape also may encompass substantially planar and/or convex regions of the vehicle sides and front panels, the nose and tail of an aircraft, and hood or trunk panel on an automobile. For example in the nose and tail of an aircraft, there may be specific aerodynamic features incorporated in the three-dimensional configuration. The front and rear (e.g., the nose and the tail) might have extra layers of impact structure. The lateral side panels and medial sides may include knitted intarsia elements for lighting or other smart applications.

The knitting machine itself may be configured to interloop a plurality of first strands with a plurality of second strands, and any number of additional strands, to form a predefined three-dimensional shape which may be a combination of shapes, textures, and structures that all are part of, or contribute to the shape of the polymer reinforcing panel. The machine also may mechanically manipulate other strands, or different portions of the same strand, of the unitary textile construction to form the above-mentioned predefined generally curved, complex or planar shapes in the complete fiber reinforcing panel and/or predefined three-dimensional convex/concave shapes, edges, structures, insulation, rigid areas, impact zones, corrugation, electrical channels, embedded wiring, and other knitted structures in the three-dimensional polymer reinforcing structure. The latter shapes may correspond generally with the exterior panels and/or the respective edges or other portions of the vehicle interior panels.

During the knitting process, the knitting machine knits a fully formed unitary polymer reinforcing panel to form the respective components of the three dimensional fully finished panel with completely finished edges. For instance, the knitting machine knits and constructs adjacent structures, including fold over insulation for an interior assembly, adds the hardware attachment appendages as inserts as the machine progresses, then moves the stitches for the hardware appendages to an alternative needle bed and attaches the hardware appendage stitches to the reverse side of the panel edge, which have respective predefined shapes and patterns. In this method of manufacturing, the hardware appendage stitches may be formed horizontally and attached by the machine to appear perpendicular to the body fabric of the panel, in order for the machine to close or seal the edges with knitting loops, thereby resulting in a seamless structure. The hardware appendage area may incorporate a functional design, combination of strands, or pattern lines, for reinforcement, stress and strain management.

According to embodiments of the present disclosure, a polymer reinforcing fiber panel structure (such as that used in vehicle assembly) may be created on a knitting machine in a knitted construction with a single layer or multiple layers, completely fashioned to shape by the machinery, with no cutting, no sewing, and no excess trimming of the polymer reinforcing panel or polymer reinforcing panel layers. For example, the knitted configuration may be a spacer, which is a fabric having a single faced fabric made on one bed and a reverse single faced fabric made on the opposing V-bed and having both single fabrics being connected by an internal strand/or combination of strands configured in "V" or "X" patterns of interlacing between the two faces. The two face fabrics are connected by tucking or knitting selected needles on each bed. The frequency and configuration of the "V," "X," "W" or other pattern of interlacing between the two face fabrics correlates with the space size variation characteristics between the face fabrics, otherwise known as cushioning.

With regard to the method for knitting the fully shaped three-dimensional polymer reinforcing fiber panel, in some embodiments, the knitted construction may have a single layer or multiple layer fully-shaped appendage reinforcement and/ or liner areas. Each layer or liner is completely fashioned to shape by the machinery, with no cutting, no sewing, and no excess trimming of the appendage or panel layers. For example, the configuration may be knitted as an attached but separately-shaped leading edge aesthetic or reinforcement shape with a performance or aesthetic strand, aramid or para-aramid strand and/or a strand combined with a thermoplastic adhesive strand, where the shape is connected to the leading edge of the main body polymer reinforcing panel and is folded over or under the three-dimensional polymer reinforcing fiber panel body and assembled in an after-process related to the molding and/or assembly process. The configuration may be knitted as an attached but separately shaped hardware attachment areas, which may have an aesthetic and/or reinforcement shape with a performance or aesthetic strand, aramid or para-aramid strand and/or a strand combined with a thermoplastic adhesive strand, where the shape is connected to the interior of the panel and is folded over or under the fully shaped three-dimensional vehicle panel body and assembled in an after-process related to the molding and/or assembly process.

The configuration may be knitted as an attached but separately shaped super structure, which may have an aesthetic or reinforcement shape with a performance or aesthetic strand, aramid or para-aramid strand and/or a strand combined with a thermoplastic adhesive strand, where the shape is connected to the center of the vehicle panel and is folded into the fully shaped three-dimensional vehicle panel body and assembled in an after-process related to the molding and/ or assembly process.

The configuration may be knitted as an attached but separately shaped under structure, which may have an aesthetic or reinforcement shape with a performance or aesthetic strand, aramid or para-aramid strand and/or a strand combined with a thermoplastic adhesive strand, where the shape is connected to the interior of the vehicle panel and is folded over into the underside of the fully shaped three-dimensional polymer reinforcing fiber vehicle panel body and assembled in an after-process related to the molding and/or assembly process.

The configuration may be knitted as an attached but separately shaped lateral and/or medial appendage, which may have an aesthetic, insulative, or reinforcement shape with a performance or aesthetic strand, aramid or para-aramid strand and/or a strand combined with a thermoplastic adhesive strand, where the shape is connected to the interior or exterior region of the vehicle panel and is folded over or under the fully shaped three-dimensional vehicle panel body and assembled in an after-process related to the molding and/or assembly process.

The configuration may be knitted as an attached but separately shaped insulation component which may be knitted to shape with a performance, cushioning, spacer or aesthetic strand, aramid or para-aramid strand and/or a strand combined with a thermoplastic adhesive strand, where the insulation/acoustic shape is connected to the a point on vehicle panel, which can be folded over or under the fully shaped three-dimensional vehicle panel body and assembled in an post process related to the molding and/or assembly process.

The configuration may be knitted as an attached but separately shaped full panel liner, which may have an aesthetic or reinforcement shape with a performance or aesthetic strand, aramid or para-aramid strand and/or a strand combined with a thermoplastic adhesive strand, where the shape is connected to the vehicle panel in the knitting process and is folded over or under the fully shaped three-dimensional vehicle panel body and assembled in an after-process related to the molding and/or assembly process.

The configuration may be knitted as an attached but separately shaped strap, tab, closure system, webbing or other shaped appendage, which may have an aesthetic or reinforcement shape with a performance or aesthetic strand, aramid or para-aramid strand and/or a strand combined with a thermoplastic adhesive strand, where the shape is connected to a point on the fully shaped three-dimensional vehicle panel body and assembled in a post process related to the molding and/or assembly process.

In some embodiments, the knitted construction may be a single unit, knitted one at a time, or may be one unit of a strip of units that are '"daisy chained" sequentially, for example, interconnected in the manner of: panel edge to panel edge; top side to bottom side; right side to left side; or any point or combination of points on the vehicle panel to another adjacent or opposing point.

In some embodiments, different knitted components of a knitted vehicle panel are contiguous and continuous with one another, being formed from the plurality of strands that make up the unitary textile material in pre-preg form, or non-pre-preg format. Indeed, many of the individual strands may span the length of a vehicle panel (e.g., from the top to the bottom or from right to left) and may be inter-looped in specific regions of the vehicle panel, thereby integrated to form the different knit patterns of the vehicle panel. Thus, as one example, a knitting machine may inter-loop a first strand with a second strand near the bottom. The first strand may continue into a vertical element through the center and one side. In the side area, that strand may be inter-looped or combined with additional strands within the knit pattern to form cushioning insulation on the reverse side. The same strand may extend into and be inter-looped with yet other strands to provide reinforcement in the knit pattern in one or several hardware appendages. The same strand may extend along the entire vehicle panel with minimal waste. By utilizing the same yarns throughout the knitting process, it reduces the wastage of the elemental yarn materials and other materials while creating a robust reinforcement structure with completely finished edges of the vehicle panel, requiring no cutting, sewing, or trimming of the vehicle panel.

According to the embodiments of the present disclosure, a knitting process alone can produce a shaped three-dimensional polymer reinforcing fiber vehicle panel in multiple components or in a unitary construction. The resultant panel or panel complex can be a body of the vehicle panel, insulation, super structures and interior structures, hardware appendages, respective apertures and as well as the different components of the vehicle panel in respective zones with their respective structures and patterns. The knitting process can be performed in an automated manner without requiring direct manual, human manipulation of any strands in the machine.

Whether to produce a three-dimensional component panel complex or a unitary construction of a fully shaped three-dimensional polymer reinforcing fiber panel, the material fabric and/or knit configuration, and in particular its multiple strands, may be machine-manipulated to provide different knit patterns. During the knitting process, the knitting machine effectively knits a plurality of strands individually and/or collectively to form the different regions of the fully shaped three-dimensional vehicle panel and/or component in a unitary construction. For example, a panel includes the first knit region of the leading edge, the second knit region the central panel, the impact areas, the curved edges of the apertures, the hardware appendages and/or insulation attachment area, as well as the end stitches of the liner panel used to attach to the corresponding sides of the vehicle panel exterior surface.

In some embodiments, a majority of the vehicle panel may be weft knitted, and may include multiple structural elements, such as a vertical tubular, a horizontal inlay, vertical inlay elements, pockets, housing structures, and embedded materials as described above. The knitting machine creates all of these different components and patterns in an automated mechanized process using multiple needles through which the yarn, filament, inlay, extrusion or other element is dispensed and included in the fully shaped three-dimensional vehicle panel. Effectively, the plurality of strands is put in place via mechanical manipulation of the respective needles of the knitting machine, within the three-dimensional vehicle panel. None of the strands are subject to direct manual human manipulation to form the pocket body, let alone any of its three-dimensional shapes or components.

Throughout the knitting process, the knitting machine knits different regions and different patterns. As mentioned above, it may knit a first pattern, a second pattern, and successive patterns, forming the shaped structure therein, as well as the optional exterior elements, as well as the optional interior elements, additional structural details and all regions to create a functional vehicle panel. In constructing the different patterns, the knitting machine may change the fabric density by varying the number of strands, courses "rows" and/or wales "stitches" in a given region as well as in different regions of the three-dimensional vehicle panel. For example, the knitting machine may manipulate the strands so that the density of strands in the perimeter edge is smaller than the density in the insulation region and other regions to facilitate assembly. The density of strands in the edge area may likewise be greater than the density in the bottom center and other regions, to enhance stiffness and prevent the panel from vibrating.

Where the edges, constructed from the plurality of strands of the first material interfaces or transitions to the other components such as the hardware appendage knitted pattern for assembling ease, third pattern for acoustic/insulation cushioning, or aperture pattern for reinforcement, the strands of the first material may be interloped and interlaced directly with the knitted strands of the adjacent region of the second material. To achieve this, different needles of the machine feed and inter-loop the different materials in the respective different locations and one of two needle beds and transfer cams may move stitches from one area to another. One of two additional and alternative needle beds may attach loops from one location of fabric structure to another. After a fully shaped three-dimensional vehicle panel is knitted and completed by the knitting machine, it may be removed from the knitting machine and later joined with a liner component and other three-dimensional knitted components, and ultimately a chassis configuration in a desired manner as described herein.

In some embodiments, a knitting machine may be programmed or otherwise controlled to generate individual stand-alone fully shaped three-dimensional vehicle panels, or a daisy-chained strip of fully shaped three-dimensional vehicle panels. For example a daisy chain includes the first, the second, the third and more complete fully shaped three-dimensional vehicle panels, each knitted in a manner similar to that described above.

For instance, the machine may knit a first fully shaped three-dimensional vehicle panel, second fully shaped three-dimensional vehicle, and third fully shaped three-dimensional vehicle, or any other number of fully shaped three-dimensional vehicle panel. In some embodiments, each three-dimensional vehicle panel knit pattern may be different from the patterns of the respective subsequent three-dimensional vehicle panels. Of course, the patterns may be changed to be similar to those of the respective initial three-dimensional vehicle panel if desired within the edge interface as well.

In some embodiments, the knitting machine, or other automated panel assembly machine, may be controlled by a controller to produce the daisy-chained strip of fully shaped three-dimensional vehicle panels. The controller may be any conventional processor, computer or other computing device. The controller may be electrically coupled to the machine, and may be in communication with a memory, a data storage module, a network, a server, or other construct that may store and/or transfer data. That data may be particular type of data related to knitting vehicle panels. For example, the data may include a profile of a first fully shaped three-dimensional vehicle panel, specifying one or more particular knitting patterns or other patterns and the instructions to control the knitting process to create such a panel. The data for a fully shaped three-dimensional vehicle panel may be implemented, accessed and/or utilized by the machine, in the form of a code, program and/or other directive. The fully shaped three-dimensional vehicle panel data, when executed, ultimately may generate in the fully shaped three-dimensional polymer reinforcing fiber vehicle panel features such as: the predefined three-dimensional shape; the position, dimension and/or depth of a specific area of a panel structure; the position of an apex and compound curve of the vehicle panel; the length and location of an aperture with interior edge corrugation structure; the position and dimension of various edges and calibration marks for assembly to the interior three-dimensionally knitted components, hardware, and chassis; the position and dimension of a leading edge; the position and dimension the corrugation, acoustic cushioning/ insulation areas and/or lip edge of the vehicle panel; the lateral and vertical stiffness of the hardware appendage structure; the minimum and maximum width and length of the fully shaped three-dimensional vehicle panel; the side to side curvature of the aperture, leading edge, central panel, interior elements, embedded elements, and the like.

In some embodiment, a panel configuration, can be converted to digital data by using a body scanner to scan a model, e.g., to generate a point cloud. The scanned data can be interpreted, input manually, or otherwise digitally gathered and combined with the polymer reinforcing structure programming data by the V-bed knitting machine or computer coupling system. The V-bed knitting machine or computer coupling system automatically converts the user selection data into the form of a code or set of data codes to configure the user's desired modifications to the original three-dimensional polymer reinforcing structure computerized knitting program. The control or other device may interpret the raw data, scan, or point cloud and reduce the data to code usable by the knitting machine .The v-bed machine accesses the converted data code to create knitting production instructions, which are then accessed and implemented by the V-bed knitting machine to create one or more desired customized aesthetic variations and/or customized functional variations of the original seamless three-dimensional polymer reinforcing structure.

The controller and/or the automated vehicle panel knitting/assembly machine may access the fully shaped three-dimensional vehicle panel data to thereby control the knitting/assembly machine and produce a strip of fully shaped three-dimensional vehicle panels, sequentially, in a desired number and configuration. Each of the fully shaped three-dimensional vehicle panels may include a substantially identical predefined three-dimensional shape, and may have virtually identical physical features, such as those enumerated above in connection with the fully shaped three-dimensional vehicle panel data. Alternatively, if the machine is configured to produce only a single fully shaped three-dimensional vehicle panel, the machine may be controlled by the controller, which may utilize the first fully shaped three-dimensional vehicle panel data to produce a fully shaped three-dimensional vehicle panel having features that correspond to the panel configuration specified by first fully shaped three-dimensional vehicle panel data.

In turn, a user may experiment with those different fully shaped three-dimensional vehicle panel profiles, sizes, and/or styles, and select the one that best suits their preferences for assembly. In addition, if a user has a particular vehicle profile preference, that profile of a particular fully shaped three-dimensional vehicle panel may be stored in a database. When the user damages their first fully shaped three-dimensional vehicle panel, they may request another fully shaped three-dimensional vehicle panel, identical to the first fully shaped three-dimensional vehicle panel, and it is produced again. This may enhance the experience of the user and of the manufacturer, since no parts need to be inventoried or stored. Also, the manufacturer need not go through extensive selection process and time period to locate a fully shaped three-dimensional vehicle panel that performs as desired. Instead, upon purchase of the new fully shaped three-dimensional vehicle panel combination, the fully shaped three-dimensional vehicle panel will be produced on-demand, and consistently perform as expected for the user. The panels may have aesthetic designs or jacquard knitted into the main body. These designs or jacquards may be customized by the user, and subsequently knitted by the machine.

In the conventional art, fiber reinforced composite vehicle panels are produced by forming two-dimensional cut and assembled shaped vehicle panels or three-dimensional semi-finished vehicle panels. The individual pieces or semi-finished vehicle panels typically require waste. Warp knitting or weft knitting roll goods, then cutting and assembling to shape, also requires waste.

According to embodiments of the present invention, to knit fully shaped three-dimensional vehicle panels, the start, the interface of the leading-edge element is only a strand, or a couple of strands waste and a decoupling strand, which protects the finished bottom edge "leading edge." In manufacturing an individual fully shaped three-dimensional vehicle panel, the hardware appendage structures, the aperture, and other edge areas have no edge interface and therefore no waste section.

In manufacturing a daisy-chained strip of fully shaped three-dimensional vehicle panels, the next leading-edge structure area has an edge interface strand protecting the finished edge. The interface strand links up to bottom edge "leading edge interface strands of the next fully shaped three-dimensional vehicle panel, separated by a decoupling strand. This transition area may mimic or follow the curvature of the bottom edge "leading edge" of a particular subsequent three-dimensional polymer reinforcing panel structure or panel portion as desired. Therefore, there is no waste section and only a few strands waste per unit, which can be as low as less than 1% of the total weight of the shaped three-dimensional polymer reinforcing panel structure.

In one example, the respective edges, for example one leading edge structure knitted to the end of the unit and then subsequently to the next leading edge, may be joined with the edge interface strands in the form of a single pull stitch or strand. This pull stitch may be pulled by a machine or a human operator so that the respective edges separate from one another and/or the edge interface, thereby allowing one fully shaped three-dimensional vehicle panel to be removed from, or dissociated from, another fully shaped three-dimensional vehicle panel. Likewise, the edge interface may include one or more pull strands that may be pulled via a machine or human operator to separate the lower edge from the edge interface.

In some cases, where the subsequent edge ("leading edge") of one fully shaped three-dimensional vehicle panel is joined directly with the previous vehicle panel edge "hardware appendage structure" of another fully shaped three-dimensional vehicle panel, a pull strand at the edge interface may be pulled to separate the second fully shaped three-dimensional vehicle panel from the first fully shaped three-dimensional vehicle panel.

Another mechanism for separating the fully shaped three-dimensional vehicle panels from the daisy-chained strip may include the use of a decoupling element. This decoupling element may decouple one fully shaped three-dimensional polymer reinforcing fiber vehicle panel from the next, e.g., at the edge interface or respective edges of the fully shaped three-dimensional vehicle panels. The decoupling device may include shears, pressurized steam, thermoplastic strand, or other separating device or mechanism, which cuts, pulls, or melts the thermoplastic separation strands across the lower edge ("leading edge") of each fully shaped three-dimensional polymer reinforcing panel. In so doing, those shears cut, the pressurized steam melts or evaporates off, the next adjacent and/or successive fully shaped three-dimensional polymer reinforcing panel. The decoupling element may make multiple cuts, multiple pulls, or steaming traverses, one adjacent the polymer reinforcing panel edge "hardware appendage structure" of each successive fully shaped three-dimensional polymer reinforcing panel and/or adjacent the lower edge "leading edge" of the each successive fully shaped three-dimensional polymer reinforcing panel. In cases where the edge interface element is only a strand or a couple of strands wide, the decoupler may cut or steam melt across this edge interface, thereby separating the respective edges of the third and second fully shaped three-dimensional polymer reinforcing panels. From there, the fully shaped three-dimensional polymer reinforcing panels may be placed into a bin or other container for further processing on an individual basis. A continuous strip of multiple fully shaped three-dimensional polymer reinforcing panels may be rolled on a spool and delivered to a manufacturer who may then mechanically or manually disassociate the individual fully shaped three-dimensional polymer reinforcing panels from the daisy-chained strip.

Upon decoupling the individual fully shaped three-dimensional polymer reinforcing panels, each of the fully shaped three-dimensional polymer reinforcing panels generally retain their predefined three-dimensional shapes resultant from the knitting process. For example, even upon decoupling, the individual panels will retain the concavity of the concave shape and/or contour of the leading edge, center panel, edges, aperture, and hardware appendage structure. Retaining its shape also assures that the fully shaped three-dimensional polymer reinforcing panel fits consistently into other after-processing tools and assembly equipment that is required for manufacturing the finished polymer reinforcing panel "3D panel" repeatedly and consistently.

A fully shaped three-dimensional polymer reinforcing panel daisy-chained strip may include panels of varying widths. For example, the machine may vary the widths of the fully shaped three-dimensional polymer reinforcing panels daisy-chained strip by size and/or individual fully shaped three-dimensional polymer reinforcing panels of the strip, interconnected with a strand. For example, the machine may mechanically manipulate strands to generate fully shaped three-dimensional polymer reinforcing panels along the strip that have a width at their outermost lateral boundaries of the number of needles in the respective knitting machine. This is generally the maximum width possible of the fully shaped three-dimensional polymer reinforcing fiber panels strip, and along its length there is no limit. This maximum width may correspond to the region of the fully shaped three-dimensional polymer reinforcing panels as measured across the widest part of the polymer reinforcing panel. It also may be the maximum of width of any individual fully shaped three-dimensional polymer reinforcing fiber panel component that is formed along the daisy-chained strip. The machine also may mechanically manipulate the strands and the overall width of the daisy chained strip so that the daisy-chained strip includes a second width, which is less than the first width. The second width may correspond generally to an individual three-dimensionally knitted polymer reinforcing panel component, such as a separate configuration of a: insulation components, hardware appendage structure tab system and/or other structural construction fitted in a molding or assembly after process. By precisely knitting the daisy-chained strip in the respective fully shaped three-dimensional polymer reinforcing panels and componentry, thereby minimal waste is generated from the process. This can be true even when the individual fully shaped three-dimensional polymer reinforcing panels and components in the daisy-chained strip have different configurations, e.g., different widths. Without the knitting machine knitting a fully shaped three-dimensional polymer reinforcing panel as a unit, or with the edge interface strand, the material that is usually knitted between the maximum width and the smaller width with off the shelf machine builder software and CAD would otherwise be removed and discarded as waste. Further, removing this material would typically require additional machinery and/or human intervention or manipulation.

Frequently, a fabric, yarn, strand, or a textile structure is used in a polymer reinforcing panel for the purpose of adding an aesthetic element. A textile may be defined as any manufacture from fibers, filaments, or yarns characterized by flexibility, fineness, and a high ratio of length to thickness. The materials forming the polymer reinforcing panel may be selected based upon the properties of wear-resistance, flexibility, stretch, and air-permeability, for example. The fiber reinforced polymer reinforcing panel may be formed by a method of cutting and sewing, therefore cut from numerous material elements. Each may impart different properties to specific portions of the polymer reinforcing panel. This cutting and sewing method creates considerable waste, which may pose a challenge to recycle.

Two-dimensionally shaped knitted textiles and/or three dimensionally knitted textiles, which are semi-finished textiles used in polymer reinforcing panels, are generally joined at the hardware appendage structure or other parts of the panel. Generally, fiber reinforced polymer matrices provide lightweight, strong structures that are have great length to weight ratio. Use of roll good fabrics, die cut, hand cut, two-dimensionally shaped knitted textiles and/or three dimensionally knitted textiles which are semi-finished in polymer reinforcing panels typically require many joins and additional labor. Seams introduce difficulties and limitations, to include difficulties in manufacture and freedom of design, and unintended failure points in structural dynamics. In the case of fiber reinforced polymer matrices, joining these cut pieces created special handling issues for assemblers, and handlers. The join types and join types are limited to specific techniques. With regard to durability, a polymer reinforcing panel formed entirely in one piece may advantageously have no seam weakness or seam failure points.

To impart other properties to the fully finished three-dimensionally knitted polymer reinforcing panel, including durability, flexion, and impact-resistance, additional materials are typically combined or integrated in the knitting process, including but not limited to reflective, fire resistant, thermoplastic, insulative, adhesive, reinforcing, cushioning, aesthetic, conductive, electronic, and aesthetic for examples. Three-dimensionally knitting a polymer reinforcing panel to shape advantageously allows integrating specific materials into areas, the ability to transition or blend the reinforcement, structural or other specific performance features, into desired regions to: reinforce against abrasion, impact, or other forms of wear; provides seamless appearance; creates areas of flexion resistance/limitation or other performance features; better secures the polymer reinforcing panel to the chassis; and minimizes waste of materials.

Generally, a knitted polymer reinforcing fiber element with specific performance properties could be incorporated into a wide variety of different articles. Examples of articles that could incorporate a knitted Polymer reinforcing fiber element include, but are not limited to: automobiles, vans, truck, motor homes, campers, electric vehicles, buses, carts, wagons, caravans, recreational vehicles, airplanes, drones, helicopters, gliders, hover crafts, all-terrain vehicles, scooter, trains, rovers, boats, gondola, house boat, catamaran, row boat, racing sloop, sail boat, surf board, water ski, sleds, bob sleds, golf carts, wheelbarrow, submersible, canoes, snow boards, kayaks, toys, skates, bicycles, motor cycles, lawnmowers, tractors, strollers, chair lifts, fork lifts, bulldozers amusement rides, playground equipment, helmets, protective gear, as well as other similar articles. The significant weight savings, improved mechanical properties and thinner laminates may improve many vehicle components. Some examples include, but are not limited to the monocoque, exterior body, interior structures, interior panels, such as the dash and console, and floors, as well as exterior panels of vehicles, and any other type of mobility, and transportation equipment. Additionally, the article could be another type of article including, but not limited to golf clubs, tennis rackets, hockey sticks, backpacks e.g., motorcycle bags, laptop bags, etc., luggage, cargo holders, bins, covers, helmets, protective gear, medical devices, ballistic armor, as well as other articles that may or may not be worn.

While various embodiments have been described, the description is intended to be exemplary, rather than limiting and it will be apparent to those of ordinary skill in the art that many more embodiments, configurations, and implementations are possible and are within the scope of the attached claims and their equivalents. Also, various modifications and changes may be made within the scope of the attached claims. Other systems, methods, features and advantages of the embodiments will be, or will become, apparent to one of ordinary skill in the art upon examination of the following figures and detailed description.

## Claims

1. A method of manufacturing a fiber reinforced polymer composite panel (3) comprising a plurality of reinforcing structure portions, the method comprising:
performing a knitting process on a knitting machine to produce a three-dimensional reinforcement knit structure (1) having a unitary construction,
wherein the knitting process knits the reinforcement knit structure to a predefined three-dimensional shape corresponding to the final panel product by knitting to shape one or more reinforcement strands to form the reinforcement knit structure so as to fit a mold, ready for a molding and/or resin application process,
wherein the one or more reinforcement strands comprises polymer reinforcing fibers,
wherein the reinforcement knit structure (1) comprises the plurality of reinforcing structure portions comprising: a leading edge area; a top edge and a central area,
wherein each of the plurality of reinforcing structure portions is knitted contiguously into shape through the knitting process and is connected to another portion by knitting stitches that are generated in the knitting process, and
performing a polymer composite process using the mold to transform the reinforcement knit structure (1) into the fiber reinforced polymer composite panel (3).

2. The method of Claim 1, wherein the knitting process comprises weft and/or weft knit warp knitting the one or more reinforcement strands by operating two or more needle beds (13) on the knitting machine.

3. The method of Claim 1, wherein the fiber reinforced polymer composite panel (3) comprises a void (51), wherein the void (51) is surrounded by the reinforcement knit structure (1) which is formed through the knitting process.

4. The method of Claim 1, wherein the knitting process comprises performing one or more of: knitting; floating; intarsia; plaiting; and inlaying on the one or more reinforcement strands.

5. The method of Claim 1, wherein the reinforcement knit structure (1) comprises one or more of: a corrugation area (71); a tunnel (50); an insert segment; a mitered edge; a void (51); a wedge (52); a short row (53); a pocket; a conductive tube; cavity; a dimensional reinforcement structure; and an embedded wire assembly.

6. The method of Claim 1, wherein the reinforcement knit structure (1) comprises a main body and an appendage (56) of the reinforcement knit structure (1), and wherein further the knitting process further produces the appendage (56) of the fiber reinforced polymer composite panel (3) by knitting a different strand than the main body; and a live-hinged textile that connects the appendage (56) to main body.

7. The method of Claim 6, wherein the appendage (56) is an interior liner layer of the fiber reinforced polymer composite panel (3).

8. The method of Claim 1, wherein the one or more reinforcement strands comprise one or more of: carbon/graphene, glass, hemp, jute, flax, boron, basalt, ceramic, metal, aramid, para-aramid, and basalt.

9. The method of Claim 1, wherein the one or more reinforcement strands comprise resin pre-impregnated or comingled material strands.

10. The method of Claim 1, wherein the knitting process produces a continuous chain of unitary knit constructions comprising the reinforcement knit structure (1), wherein the sequence of unitary knit constructions have different configurations or have an identical configuration, and wherein further each unitary knit construction in the chain connects with another through live sacrificial strands that are generated in the knitting process.

11. The method of Claim 1, wherein the reinforcement knit structure (1) comprises a weft knit warp textile section formed by a plurality of strategically placed strands arranged in the reinforcement knit structure (1), wherein the knitting process comprises knitting one or more functional strands into a plurality of layers, layer portions, components, and/or plies.

12. The method of Claim 11, wherein the polymer composite process comprises pressing the plurality of layers, layer portions, components, and/or plies into a mold structure to form the fiber reinforced polymer composite panel (3).

13. The method of Claim 11, wherein further the polymer composite process comprises selectively heating a member of the plurality of layers, layer portions, components, and/or plies.

14. The method of Claim 11, wherein the plurality of plies comprise one or more of: a corrugation area (71); a tunnel (50); a pocket; a conductive tube; a mitered edge; a void (51); a wedge (52); a short row (53); an aramid; a natural fiber; a para-aramid; a ceramic; a warp knit weft insert; and a wire assembly.

15. The method of Claim 1, wherein the reinforcement knit structure (1) comprises knitted courses of different lengths, and wherein further the knitting process comprises inserting the one or more reinforcement strands vertically, diagonally, horizontally and or any combinations of directions along one or more knitted courses.

16. The method of Claim 1, wherein the polymer reinforcing fibers comprise one or more of: carbon fibers and oxidized fibers, and wherein further the polymer composite process comprises heating the reinforcement knit structure (1).

17. The method of Claim 1, wherein the reinforcement knit structure (1) comprises a section of multiple layers, layer portions, components, and or plies that have different knit courses resulting from the knitting process, wherein the knitting process comprises generating a connective knit structure to connect the multiple layers, layer portions, components, and/ or plies.

18. The method of Claim 17, wherein the knitting process comprises knitting a thermoplastic adhesive strand to a select member of the multiple layers, layer portions, components, and/or plies to affix the select member to an adjacent member.

19. The method of Claim 17, wherein the multiple layers, layer portions, components, and/or plies comprise pointelle mesh, lattice, and/or apertures used for aligning.

20. The method of Claim 17, wherein the knitting process further comprises one or more functional strands in addition to the one or more reinforcement strands to form the reinforcement knit structure (1), wherein the functional strands are resistant to the polymer composite process.

21. The method of Claim 1, wherein the reinforcement knit structure (1) comprises a knitted tubular structure (81) having a graduated diameter (80), and wherein the knitting process comprises weft and/or weft knit warp insert knitting the one or more reinforcement strands to form the knitted tubular structure (81).

## Patentansprüche

1. Verfahren zur Herstellung einer faserverstärkten Polymerverbundflachware (3), umfassend eine Vielzahl von verstärkenden Strukturabschnitten, wobei das Verfahren umfasst:
Durchführen eines Strickvorgangs auf einer Strickmaschine, um eine dreidimensionale Verstärkungsstrickstruktur (1) mit einer einheitlichen Konstruktion herzustellen,
wobei der Strickvorgang die Verstärkungsstrickstruktur zu einer vordefinierten dreidimensionalen Form strickt, die dem endgültigen Flachwarenprodukt entspricht, indem ein oder mehrere Verstärkungsstränge zu einer Form gestrickt werden, um die Verstärkungsstrickstruktur so zu formen, dass sie in eine Form passt und für einen Formungs- und/oder Harzauftragungsvorgang bereit ist,
wobei der eine oder die mehreren Verstärkungsstränge Polymerverstärkungsfasern umfassen,
wobei die Verstärkungsstrickstruktur (1) eine Vielzahl von Verstärkungsstrukturabschnitten umfasst, die Folgendes umfassen: einen vorderen Randbereich; einen oberen Rand und einen mittleren Bereich,
wobei jeder der Anzahl der Verstärkungsstrukturabschnitte durch den Strickvorgang zusammenhängend in Form gestrickt und durch im Strickvorgang erzeugte Strickstiche mit einem weiteren Abschnitt verbunden wird, und
Durchführen eines Polymerverbundvorgangs unter Verwendung der Form, um die Verstärkungsstrickstruktur (1) in die faserverstärkte Polymerverbundflachware (3) umzuwandeln.

2. Verfahren nach Anspruch 1, wobei der Strickvorgang das Schuss- und/oder Schussstrickkettenstricken der einen oder mehreren Verstärkungsstränge durch Betreiben von zwei oder mehr Nadelbetten (13) an der Strickmaschine umfasst.

3. Verfahren nach Anspruch 1, wobei die faserverstärkte Polymerverbundflachware (3) einen Hohlraum (51) umfasst, wobei der Hohlraum (51) von der Verstärkungsstrickstruktur (1) umgeben ist, die durch den Strickvorgang gebildet wird.

4. Verfahren nach Anspruch 1, wobei der Strickvorgang einen oder mehrere der folgenden Schritte durchführt: Stricken, Floating, Intarsia, Flechten und Einlegen auf einen oder mehrere Verstärkungsstränge.

5. Verfahren nach Anspruch 1, wobei die Verstärkungsstrickstruktur (1) eines oder mehrere der folgenden Elemente umfasst: einen Wellungsbereich (71); einen Tunnel (50); ein Einsatzsegment; eine Gehrungskante; einen Hohlraum (51); einen Keil (52); eine kurze Reihe (53); eine Tasche; ein leitfähiges Rohr; eine Kavität; eine dimensionale Verstärkungsstruktur; und eine eingebettete Drahtanordnung.

6. Verfahren nach Anspruch 1, wobei die Verstärkungsstrickstruktur (1) einen Hauptkörper und einen Fortsatz (56) der Verstärkungsstrickstruktur (1) umfasst und wobei der Strickvorgang weiter den Fortsatz (56) der faserverstärkten Polymerverbundflachware (3) durch Stricken eines anderen Strangs als dem Hauptkörper erzeugt; und ein beweglich scharnierartiges Textil, das den Fortsatz (56) mit dem Hauptkörper verbindet.

7. Verfahren nach Anspruch 6, wobei der Fortsatz (56) eine innere Auskleidungsschicht der faserverstärkten Polymerverbundflachware (3) ist.

8. Verfahren nach Anspruch 1, wobei der eine oder die mehreren Verstärkungsstränge eines oder mehrere der folgenden Materialien umfassen: Kohlenstoff/Graphen, Glas, Hanf, Jute, Flachs, Bor, Basalt, Keramik, Metall, Aramid, Para-Aramid und Basalt.

9. Verfahren nach Anspruch 1, wobei der eine oder die mehreren Verstärkungsstränge Harz vorimprägnierte oder gemischte Materialstränge umfassen.

10. Verfahren nach Anspruch 1, wobei der Strickvorgang eine kontinuierliche Kette von einheitlichen Strickkonstruktionen herstellt, die die Verstärkungsstrickstruktur (1) umfassen, wobei die Sequenz der einheitlichen Strickkonstruktionen unterschiedliche Konfigurationen oder eine identische Konfiguration aufweist und wobei weiter jede einheitliche Strickkonstruktion in der Kette mit einer weiteren durch aktive Opferstränge verbunden ist, die im Strickvorgang erzeugt werden.

11. Verfahren nach Anspruch 1, wobei die Verstärkungsstrickstruktur (1) einen Schussstrickkettentextilabschnitt umfasst, der durch eine Vielzahl von strategisch platzierten Strängen gebildet wird, die in der Verstärkungsstrickstruktur (1) angeordnet sind, wobei der Strickvorgang das Stricken eines oder mehrerer Funktionsstränge zu einer Vielzahl von Schichten, Schichtabschnitten, Komponenten und/oder Lagen umfasst.

12. Verfahren nach Anspruch 11, wobei das Polymerverbundverfahren das Pressen der Vielzahl von Schichten, Schichtabschnitte, Komponenten und/oder Lagen in eine Formstruktur umfasst, um die faserverstärkte Polymerverbundflachware (3) zu bilden.

13. Verfahren nach Anspruch 11, wobei das Polymerverbundverfahren weiter das selektive Erhitzen eines Elements aus der Vielzahl von Schichten, Schichtabschnitten, Komponenten und/oder Lagen umfasst.

14. Verfahren nach Anspruch 11, wobei die Vielzahl von Lagen eines oder mehrere der folgenden Elemente umfasst: einen Wellenbereich (71); einen Tunnel (50); eine Tasche; ein leitfähiges Rohr; eine Gehrungskante; einen Hohlraum (51); einen Keil (52); eine kurze Reihe (53); ein Aramid; eine Naturfaser; ein Para-Aramid; eine Keramik; einen Kettenstrick-Schusseinsatz; und eine Drahtanordnung.

15. Verfahren nach Anspruch 1, wobei die Verstärkungsstrickstruktur (1) Strickreihen unterschiedlicher Länge umfasst und wobei der Strickvorgang weiter das Einfügen des einen oder der mehreren Verstärkungsstränge vertikal, diagonal, horizontal und/oder in beliebigen Richtungskombinationen entlang einer oder mehrerer Strickreihen umfasst.

16. Verfahren nach Anspruch 1, wobei die Polymerverstärkungsfasern eine oder mehrere der folgenden Fasern umfassen: Kohlenstofffasern und oxidierte Fasern, und wobei das Polymerverbundverfahren weiter das Erhitzen der Verstärkungsstrickstruktur (1) umfasst.

17. Verfahren nach Anspruch 1, wobei die Verstärkungsstrickstruktur (1) einen Abschnitt aus mehreren Schichten, Schichtabschnitten, Komponenten und/oder Lagen umfasst, die aufgrund des Strickvorganges unterschiedliche Strickläufe aufweisen, wobei der Strickvorgang das Erzeugen einer verbindenden Strickstruktur zum Verbinden der mehreren Schichten, Schichtabschnitte, Komponenten und/oder Lagen umfasst.

18. Verfahren nach Anspruch 17, wobei der Strickvorgang das Stricken eines thermoplastischen Klebstoffstrangs an ein ausgewähltes Element der mehreren Schichten, Schichtabschnitte, Komponenten und/oder Lagen umfasst, um das ausgewählte Element an einem benachbarten Element zu befestigen.

19. Verfahren nach Anspruch 17, wobei die mehreren Schichten, Schichtabschnitte, Komponenten und/oder Lagen Pointelle-Gewebe, Gitter und/oder Öffnungen umfassen, die zum Ausrichten verwendet werden.

20. Verfahren nach Anspruch 17, wobei der Strickvorgang zusätzlich zu dem einen oder den mehreren Verstärkungssträngen einen oder mehrere Funktionsstränge umfasst, um die Verstärkungsstrickstruktur (1) zu bilden, wobei die Funktionsfäden gegenüber dem Polymerverbundvorgang beständig sind.

21. Verfahren nach Anspruch 1, wobei die Verstärkungsstrickstruktur (1) eine gestrickte röhrenförmige Struktur (81) mit einem abgestuften Durchmesser (80) umfasst und wobei der Strickvorgang das Einstricken der einen oder mehreren Verstärkungsstränge in den Schuss- und/oder in den Schussstrickketteinsätzen umfasst, um die gestrickte röhrenförmige Struktur (81) zu bilden.

## Revendications

1. Procédé de fabrication d'un panneau en composite polymère renforcé de fibres (3) comprenant une pluralité de parties de structure de renfort, le procédé comprenant :
la réalisation d'un procédé de tricotage sur une machine à tricoter pour produire une structure tricotée de renfort (1) tridimensionnelle présentant une construction monolithique,
dans lequel le procédé de tricotage tricote la structure tricotée de renfort selon une forme tridimensionnelle prédéfinie correspondant au produit panneau final en tricotant en forme un ou plusieurs brin(s) de renfort pour former la structure tricotée de renfort de manière à s'adapter à un moule, prête au moulage et/ou à un procédé d'application de résine,
dans lequel le ou les brin(s) de renfort comprend/comprennent des fibres de renfort polymères,
dans lequel la structure tricotée de renfort (1) comprend la pluralité de parties de structure de renfort : une zone de bord d'attaque ; un bord supérieur et une zone centrale,
dans lequel chacune de la pluralité de parties de structure de renfort est tricotée en forme de manière contiguë lors du procédé de tricotage et est reliée à une autre partie par des points de suture tricotés qui sont générés lors du procédé de tricotage, et
la réalisation d'un procédé composite polymère à l'aide du moule pour transformer la structure tricotée de renfort (1) en panneau en composite polymère renforcé de fibres (3).

2. Procédé selon la revendication 1, dans lequel le procédé de tricotage comprend le tricotage à mailles envers et/ou à mailles jetées du ou des brin(s) de renfort en actionnant deux ou plusieurs lits d'aiguilles (13) sur la machine à tricoter.

3. Procédé selon la revendication 1, dans lequel le panneau en composite polymère renforcé de fibres (3) comprend un vide (51), dans lequel le vide (51) est entouré par la structure tricotée de renfort (1) qui est formée lors du procédé de tricotage.

4. Procédé selon la revendication 1, dans lequel le procédé de tricotage comprend la réalisation d'un ou plusieurs parmi : le tricotage ; le flottement ; l'intarsia ; le tressage ; et l'incrustation sur le ou les brin(s) de renfort.

5. Procédé selon la revendication 1, dans lequel la structure tricotée de renfort (1) comprend un ou plusieurs parmi : une zone d'ondulation (71) ; un tunnel (50) ; un segment d'insert ; un bord biseauté ; un vide (51) ; une cale (52) ; une rangée courte (53) ; une poche ; un tube conducteur ; une cavité ; une structure de renfort dimensionnelle ; et un ensemble de fils intégré.

6. Procédé selon la revendication 1, dans lequel la structure tricotée de renfort (1) comprend un corps principal et un appendice (56) de la structure tricotée de renfort (1), et dans lequel en outre le procédé de tricotage produit en outre l'appendice (56) du panneau en composite polymère renforcé de fibres (3) en tricotant un brin différent autre que le corps principal ; et un textile à articulation intégrée qui relie l'appendice (56) au corps principal.

7. Procédé selon la revendication 6, dans lequel l'appendice (56) est une couche de doublure interne du panneau en composite polymère renforcé de fibres (3).

8. Procédé selon la revendication 1, dans lequel le ou les brin(s) de renfort comprend/comprennent un ou plusieurs parmi : le carbone/graphène, le verre, le chanvre, le jute, le lin, le bore, le basalte, une céramique, un métal, un aramide, un para-aramide et le basalte.

9. Procédé selon la revendication 1, dans lequel le ou les brin(s) de renfort comprend/comprennent des brins d'un matériau préimprégné ou mélangé de résine.

10. Procédé selon la revendication 1, dans lequel le procédé de tricotage produit une chaîne continue de constructions tricotées monolithiques comprenant la structure tricotée de renfort (1), dans lequel la séquence de constructions tricotées monolithiques présente des configurations différentes ou présente une configuration identique, et dans lequel en outre chaque construction tricotée monolithique dans la chaîne est reliée à un autre à travers des brins sacrificiels à articulation intégrée qui sont générés dans le procédé de tricotage.

11. Procédé selon la revendication 1, dans lequel la structure tricotée de renfort (1) comprend une section textile à mailles jetées formée par une pluralité de brins placés de manière stratégique disposée dans la structure tricotée de renfort (1), dans lequel le procédé de tricotage comprend le tricotage d'un ou plusieurs brin(s) fonctionnel(s) dans une pluralité de couches, de parties de couche, de composants, et/ou de plis.

12. Procédé selon la revendication 11, dans lequel le procédé composite polymère comprend le pressage de la pluralité de couches, de parties de couche, de composants, et/ou de plis dans une structure de moule pour former le panneau en composite polymère renforcé de fibres (3).

13. Procédé selon la revendication 11, dans lequel en outre le procédé composite polymère comprend le chauffage sélectif d'un organe parmi la pluralité de couches, de parties de couche, de composants, et/ou de plis.

14. Procédé selon la revendication 11, dans lequel la pluralité de plis comprend un ou plusieurs parmi : une zone d'ondulation (71) ; un tunnel (50) ; une poche ; un tube conducteur ; un bord biseauté ; un vide (51) ; une cale (52) ; une rangée courte (53) ; un aramide ; une fibre naturelle ; un para-aramide ; une céramique ; un insert à mailles jetées ; et un ensemble de fils.

15. Procédé selon la revendication 1, dans lequel la structure tricotée de renfort (1) comprend des rangées de mailles tricotées de différentes longueurs, et dans lequel en outre le procédé de tricotage comprend l'insertion du ou des brin(s) de renfort verticalement, diagonalement, horizontalement et/ou selon toute combinaison de directions le long d'une ou plusieurs rangée(s) de mailles tricotée(s).

16. Procédé selon la revendication 1, dans lequel les fibres de renfort polymères comprennent une ou plusieurs parmi : des fibres de carbone et des fibres oxydées, et dans lequel en outre le procédé composite polymère comprend le chauffage de la structure tricotée de renfort (1).

17. Procédé selon la revendication 1, dans lequel la structure tricotée de renfort (1) comprend une section de multiples couches, de parties de couche, de composants, et/ou de plis qui présentent des rangées de mailles tricotées différentes résultant du procédé de tricotage, dans lequel le procédé de tricotage comprend la génération d'une structure tricotée de liaison pour relier les multiples couches, parties de couche, composants, et/ou plis.

18. Procédé selon la revendication 17, dans lequel le procédé de tricotage comprend le tricotage d'un brin adhésif thermoplastique sur un organe sélectionné parmi les multiples couches, parties de couche, composants, et/ou plis pour fixer l'organe sélectionné à un organe adjacent.

19. Procédé selon la revendication 17, dans lequel les multiples couches, parties de couche, composants, et/ou plis comprennent une maille pointelle, un treillis, et/ou des lumières utilisés pour l'alignement.

20. Procédé selon la revendication 17, dans lequel le procédé de tricotage comprend en outre un ou plusieurs brin(s) fonctionnel(s) en plus du ou des brin(s) de renfort pour former la structure tricotée de renfort (1), dans lequel les brins fonctionnels sont résistants au précédé composite polymère.

21. Procédé selon la revendication 1, dans lequel la structure tricotée de renfort (1) comprend une structure tubulaire tricotée (81) présentant un diamètre gradué (80), et dans lequel le procédé de tricotage comprend le tricotage en insert à mailles envers et/ou à mailles jetées du ou des brin(s) de renfort pour former la structure tubulaire tricotée (81).
